(19) Europäisches Patentamt / European Patent Office / Office européen des brevets

(11) **EP 3 605 152 B1**

(12) **EUROPEAN PATENT SPECIFICATION**

(45) Date of publication and mention
of the grant of the patent:
**06.09.2023 Bulletin 2023/36**

(51) International Patent Classification (IPC):
**G01V 3/12** (2006.01)   **G01V 3/22** (2006.01)
**E02D 1/02** (2006.01)

(21) Application number: **18186688.0**

(52) Cooperative Patent Classification (CPC):
**G01V 3/12; G01V 3/22;** E02D 1/027; Y02A 90/30

(22) Date of filing: **31.07.2018**

(54) **GROUND PENETRATING RADAR AND ELECTROMAGNETIC SOIL ANALYSIS METHOD**

BODENDURCHDRINGENDER RADAR UND ELEKTROMAGNETISCHES
BODENANALYSEVERFAHREN

GÉORADAR ET PROCÉDÉ D'ANALYSE DE SOL ÉLECTROMAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2020 Bulletin 2020/06**

(73) Proprietor: **Lombardi SA Ingegneri Consulenti
6648 Minusio (CH)**

(72) Inventors:
- **PELLEGRINI, Damiano
  CH-6853 Ligornetto (CH)**
- **PORETTI, Samuel
  CH-6830 Chiasso (CH)**
- **BREMEN, Roger
  CH-6512 Giubiasco (CH)**
- **KATTERBACH, Maren
  CH-6632 Vogorno (CH)**
- **INAUDI, Daniele
  CH-6900 Lugano (CH)**

(74) Representative: **PGA S.p.A., Milano, Succursale di
Lugano
Via Castagnola, 21c
6900 Lugano (CH)**

(56) References cited:
**JP-A- H0 933 661     JP-A- H08 240 550
US-A- 5 408 182      US-A1- 2016 187 524**

- **REHMAN FAISAL ET AL: "Estimation of dielectric permittivity, water content, and porosity for environmental engineering and hydrogeological studies using ground penetrating radar, a short review", ARABIAN JOURNAL OF GEOSCIENCES, SPRINGER BERLIN HEIDELBERG, BERLIN/HEIDELBERG, vol. 9, no. 4, 5 April 2016 (2016-04-05), pages 1-7, XP035960518, ISSN: 1866-7511, DOI: 10.1007/S12517-016-2328-7 [retrieved on 2016-04-05]**
- **Binley Andrew ET AL: "High-resolution characterization of vadose zone dynamics using cross-borehole radar", WATER RESOURCES RESEARCH, vol. 37, no. 11, 30 November 2001 (2001-11-30), pages 2639-2652, XP055848645,**
- **ROTH K: "Calibration of time domain reflectometry for water content measurement using composite dielectric approach", WATER RESOURCES RESEARCH, AMERICAN GEOPHYSICAL UNION, US, vol. 10, no. 26, 1 January 1990 (1990-01-01), pages 2267-2273, XP002077509, ISSN: 0043-1397, DOI: 10.1029/90WR01238**
- **ROBERT BIRCHAK J ET AL: "High Dielectric Constant Microwave Probes for Sensing Soil Moisture", PROCEEDINGS OF THE IEEE,, vol. 62, no. 1, 1 January 1974 (1974-01-01), pages 93-98, XP001347803,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention.**

The present invention refers to the fields of radar devices and soil analysis; more specifically the invention concerns an electromagnetic soil analysis radar for cross-hole soil analysis. The present invention further refers to a system comprising the electromagnetic soil analysis radar. The present invention further involves an electromagnetic soil analysis method.

**Background art**

Void ratio and compactness are two of the principal parameters used for geotechnical characterization of soils. Amongst others, they determine the deformation, settlement or liquefaction potential, which in turn might significantly impair the quality as well as the performance of any soil foundation. Direct measurement of the natural void ratio is particularly difficult, since it requires undisturbed samples.

There are a few methods in order to obtain undisturbed samples directly. Direct available methods are cumbersome and very expensive to perform. Therefore, indirect methods have been developed.

Among the indirect measurement methods, the SPT - Soil Penetration Test - provides information on soil geotechnical engineering properties, and eventually soil stratigraphy through walled sampling tubes - with a standard size of typically 50.8 mm for the outer diameter and 35 mm for the inner diameter - which penetrate into a borehole; the sampling tube is repeatedly hit by blows of a slide hammer, having a predetermined mass (e.g. 63,5 kg or 140 lb). The sampling tube is driven for a predetermined depth into the borehole (e.g. 150 mm) and the number of blows required to penetrate the predetermined depth is indicative of soil compactness.

Another indirect measurement method used in this context is the CPT - Cone Penetration Test - which uses a walled tube whose free end is provided with an instrumented conical tip; the tube is pushed - forced to penetrate the soil - at a predetermined, controlled rate (e.g. 1,5 - 2,5 cm/s).

Such indirect measurement methods have some limitations and often fail, especially with heterogeneous soils also containing coarser materials. Additionally, the interpretation of the results is performed through empirical correlations, and is often affected by relevant uncertainty.

Furthermore, SPT and CPT methods are suitable to determine punctual compactness of the portions of soil which lie axially, or substantially axially with the penetration direction of the tube, and do not provide reliable indication of portions of soil which, although being just slightly axially spaced from the borehole, may have relevantly different compactness. In other words, SPT and CPT provide a 1-D image of soil compactness.

Document US2016/0187524 A1 discloses a method and apparatus for mapping the underground soil by analyzing the radio waves which propagate between a first antenna arranged in a first borehole and a second antenna arranged in a second borehole.

Document US 5408182 A disclose a facility and a method for the detection of plumes, i.e. releases of toxic wastes from containment sites by means of radiowave tomography scattering methods.

Document JP H09 33661 A discloses a device for detecting waves which propagate in the soil with relevant attenuation; the device uses orthogonal signals and operates through analyzing a correlation of signals.

A correlation between the dielectric constant of a soil and volume of water content is disclosed in the publication Rehman Faisal et al "Estimation of dielectric permittivity, water content, and porosity for environmental engineering and hydrogeological studies using ground penetrating radar, a short review" Arabian Journal of Geosciences, Springer Berlin Heidelberg, Berlin/Heidelberg vol.9, no. 4, 5 April 2016, pages 1-7, ISSN 1866-7511.

Document JP H08240550 A discloses a method to measure the amount of water in the soil through the current flowing between a first and a second electrode arranged in the soil.

Document "High-resolution characterization of vadose zone dynamics using cross-borehole radar" by Andrew Binley, Peter Winship, Roy Middleton (Dept. Environmental Science, Lancaster University) and Magdeline Pokar, Jared West (School of Earth Sciences, University of Leeds), Water Resources Research, Vol. 37, No.11, pages 2639-2652, November 2001, discloses a method for characterizing the moisture in unsaturated aquifers by means of a measurement of the travel time of an electromagnetic wave transmitted between a first antenna and a second antenna.

Document "Calibration of Time Domain Reflectometry for Water Content Measurement Using a Composite Dielectric Approach" by Kurt Roth, Rainer Schulin, Hannes Fluehler, and Werner Attinger, Institute of Terrestrial Ecology, Soil Physics, Swiss Federal Institute of Technology, Zuerich, in Water Resources Research, Vol. 26, No. 10, Pages 2267-2273, October 1990, discloses a time-domanin reflectometry for measurement of soil water content, that keeps into account a three-phase dielectric model for the soil, keeping into account the dielectric numbers for the solid, aqueous and gaseous phase.

The scope of the present invention is therefore to provide an electromagnetic soil analysis device, more specifically a radar, for crosshole soil analysis, in particular for in-situ analysis of soils, which allows to solve the limitations provided by the known indirect measurement methods and furthermore provides the determination of the amount and/or percentages of water and soil in soils filled with water (i.e. saturated soils), in order to allow the user, e.g. the geotechnical engineers, to make estimations about soil compactness.

The scope of the present disclosure is also to provide a radar soil analysis system, comprising the ground penetrating radar, for reducing drawbacks associated by the known indirect measurement methods.

The scope of the present disclosure is also to provide an electromagnetic soil analysis method which allows solving the drawbacks provided by the known indirect measurement methods.

Summary

The objects of the invention are an electromagnetic soil analysis method, an electromagnetic soil analysis device according to the independent claims 1, 7.

The main aspects of the present disclosure are hereinafter presented.

According to a first aspect is disclosed an electromagnetic soil analysis method that comprises:

- a step of making a first borehole (10) in an initial or first predetermined position in the soil (30);
- a step of making a second borehole (20) in a second predetermined position in the soil (30), the second position being different from the first position;
- a step of introducing a first antenna (101) in the first borehole (10) and a second antenna (102) in the second borehole (20);
- a step of feeding a predetermined radio signal to said first antenna (101), so that the first antenna (101) radiates said predetermined radio signal according to a predefined radiation pattern across a portion (31) of said soil (30) so that said predetermined radio signal (s1(t)) may be received by said second antenna (102);
- a step of soil compactness analysis, by determining or calculating the amount of water ($x_{water}$) and/or humidity and/or dielectric constant ($\varepsilon$') of a portion (31) of soil (30) interested by the radiation of the first antenna, said portion (31) of soil (30) being positioned between the first antenna (101) and the second antenna (102),
- wherein the step of determining or calculating the amount of water ($x_{water}$) and/or humidity and/or dielectric constant ($\varepsilon$') of the portion (31) of soil (30) is performed by electronically measuring the speed of propagation of said predetermined radio signal (s1(t)) between said first antenna (101) and said second antenna (102) or the delay with which the predetermined radio signal (s1(t)) transmitted by said first antenna (101) or through a transmitter (103) connected to said first antenna (110) reaches said second antenna (102) or a receiver (104) connected to said second antenna (102).

According to a further aspect, the portion (31) of soil (30) is a portion of soil extending, in a direction parallel to a first reference axis X, along an ideal line joining the first antenna (101) to the second antenna (102) and vertically extending, in a direction parallel to a second reference axis Y, for an amount of space including reflection and/or refraction points which are maximally separated from said line joining the first (101) to the second antenna (102) which respectively reflect and/or refract the predetermined radio signal transmitted by the first antenna (101) in such a way that may be detected through the second antenna (102) and/or through the receiver (104) connected to the second antenna (102) beyond a predetermined sensitivity point of said receiver (104).

According to a further aspect, the step of soil compactness analysis is a step of crosshole soil compactness analysis between said first borehole (10) and said second borehole (20).

According to a further aspect, the method comprises the step of moving the first antenna (101) and/or the second antenna (102) in a direction parallel to said first reference axis, and/or moving said first antenna (101) and said second antenna (102) linearly within their respective first borehole (10) and second borehole (20).

According to a further aspect, the method comprises moving the first antenna (101) and the second antenna (102) with synchronous motion in their respective first and second boreholes (10; 20).

In particular, according to a further aspect, the method comprises moving the first antenna (101) and the second antenna (102) in such a way that during their synchronous motion, the ideal line connecting the first antenna (101) and the second antenna (102) when they are at a respective first and second predetermined depth in their respective first or second hole (10; 20), at a first time of measurement, is parallel to the ideal line connecting the first antenna (101) and the second antenna (102) when they are in at respective third, fourth predetermined depth in their respective first, second hole (10; 20) at a second time of measurement, different from the first time of measurement.

According to a further aspect, moving the first antenna (101) and/or the second antenna (102) electronically provides and allows the calculation of a 2D or a two-dimensional diagram of the portion (31) of soil (30) under analysis, with the diagram comprising a first and a second coordinate along a first and a second reference axis reciprocally orthogonal, whereby the first coordinate (e.g. X axis) refers to the depth of measurement and a second coordinate (e.g.

Y axis) refers to the measured dielectric constant, and/or amount of water or percentage of water, and/or soil composition.

According to a further aspect, the first and second predetermined depths respectively held by said first and second antennas (101; 102) at said first time of measurement are substantially placed at a same first depth and the third and fourth predetermined depths respectively held by said first and second antennas (101; 102) at the second time of measurement are substantially placed at a same second depth, the second depth differing from the first depth.

According to a further aspect, the step of feeding a predetermined radio signal to said first antenna (101) comprises providing a frequency signal sweeping between a first lower predetermined frequency (f1) and a second higher predetermined frequency (f2) to the first antenna (101).

According to a further aspect, said signal is a numeric stepped sweeping signal.

According to a further aspect, the method comprises a step of signal processing of a signal received by the receiver (104) or through said second antenna (102); the step of processing producing the extraction of a first in-phase component (I) of said signal, and of a second quadrature component (Q) of said signal, and comprising performing an electronic calculation of a discrete inverse Fourier transform on at least one and preferably both said first in-phase component (I) of said signal and second quadrature component (Q) of said signal for determining said speed of propagation of said predetermined radio signal (s1(t)) or said delay with which the predetermined radio signal (s1(t)) transmitted by said first antenna (101) or through a transmitter (103) connected to said first antenna (110) reaches said second antenna (102) or a receiver (104) connected to said second antenna (102).

According to a further aspect, said signal processing and/or said performing of electronic calculation of a discrete inverse Fourier transform are made by said receiver (104).

According to a further aspect, said performing of electronic calculation of a discrete inverse Fourier transform is performed by a data processing unit (111) electronically and/or operatively connected to said receiver (104).

According to a further aspect, the first lower predetermined frequency (f1) is higher than 50MHz.

According to a further aspect, the second upper predetermined frequency (f2) is lower than 1000 MHz.

The step of determining the amount of water ($x_{water}$) and/or humidity of said portion (31) of soil (30) of the first aspect further comprises a step of providing a first electronic datum concerning the dielectric constant of the water ($\varepsilon'_{water}$), a second electronic datum concerning the dielectric constant of the soil ($\varepsilon'_{soil}$), and a third datum corresponding to a distance (d) between the first antenna (101) and second antenna (102) when in said first borehole (10) and respectively second borehole (20) and/or a distance between the first borehole (10) and the second borehole (20).

According to a further aspect, the dielectric constant of the soil may range between 3 and 5.

The step of determining the amount of water ($x_{water}$) and/or humidity in said portion of soil (30) of the first aspect further comprises a step of calculating the result of the following formula:

$$x_{water} = d - \frac{d(\varepsilon' - \varepsilon'_{water})}{\varepsilon'_{soil} - \varepsilon'_{water}}$$

wherein: d corresponds to the distance between the first antenna (101) and second antenna (102) when in the first borehole (10) and respectively second borehole (20) and/or a distance between the first borehole (10) and the second borehole (20); $\varepsilon'$ corresponds to the average dielectric constant of the portion of soil (30) directly determined and/or derived by electronically measuring the speed (v) of propagation of said predetermined radio signal (s1(t)) between said first antenna (101) and said second antenna (102) or the delay ($\Delta$t) with which the predetermined radio signal (s1(t)) transmitted by said first antenna (101) or through a transmitter (103) connected to said first antenna (110) reaches said second antenna (102) or a receiver (104) connected to said second antenna (102); $\varepsilon'_{water}$ corresponds to said first electronic datum concerning the dielectric constant of the water; $\varepsilon'_{soil}$ corresponds to said second electronic datum concerning the dielectric constant of the soil.

According to a further aspect, the step of determining the amount of water ($x_{water}$) is a step of determining the amount of water in water saturated soil or water saturated conditions.

According to a further aspect, the step of determining the dielectric constant of the portion (31) of soil (30), is a step of determining the average dielectric constant of the portion of soil and comprises the steps for:

- dividing the distance (d) between the first antenna (101) and second antenna (102) when in said first borehole (10) and respectively second borehole (20) and or a distance between the first borehole (10) and the second borehole (20) by the delay ($\Delta$t) with which the predetermined radio signal (s1(t)) transmitted by said first antenna (101) or through a transmitter (103) connected to said first antenna (110) reaches said second antenna (102) or a receiver (104) connected to said second antenna (101), for obtaining a first sub-result;
- dividing, in particular electronic dividing, a number corresponding to the speed of light in vacuum by said first sub-result, obtaining a second sub-result;
- calculating, in particular electronically calculating the power of 2 to said second sub-result, to obtain said dielectric constant of said portion (31) of soil (30).

According to a further aspect, the method comprises a step of reversing and/or switching the connection between the first antenna (101) and the second antenna (102) with the transmitter (103) and the receiver (104), said connection determining a first operative configuration, so that the first antenna (101) previously connected to the transmitter (103) results connected to the receiver (104) and so that the second antenna (102) previously connected to the receiver (104) results connected to the transmitter (103), thereby determining a second operative configuration, said method further comprising a subsequent step of determining or calculating the amount of water ($x_{water}$) and/or humidity and/or dielectric constant ($\varepsilon'$) of the portion (31) of soil (30) in said second operative configuration and, optionally, calculating an average and/or difference between the water ($x_{water}$) and/or humidity and/or dielectric constant ($\varepsilon'$) of the portion (31) of soil (30) when in said first operative configuration with the amount of water ($x_{water}$) and/or humidity and/or dielectric constant ($\varepsilon'$) of the portion (31) of soil (30) when in said second operative configuration.

According to a further aspect, the step of determining the amount of water ($x_{water}$) and/or humidity of said portion (31) of soil (30) comprises a preventive step of compensation of air humidity and/or calibration, said step comprising setting the first antenna (101) and the second antenna (102) at a distance equal to the distance d of the first to second borehole (10; 20), with only free air between the first and the second antenna (101, 102) and a subsequent step comprising activating the transmitter (103) in order to perform at least one measurement of a dielectric constant ($\varepsilon'$) between said first antenna (101) and said second antenna (102).

According to a further aspect, it is disclosed a computer program product, the computer program product being stored on a non-transitional memory support, comprising software code portions suitable to be executed by a data processing unit, said software code portions causing the execution of the subsequent steps:

- a step of making a transmitter (103) feed a predetermined radio signal to a first antenna (101), so that the first antenna (101) radiates a predetermined radio signal according to a predefined radiation pattern;
- a step of setting a receiver (104) connected to a second antenna (102) to receive at least a propagated part of said predetermined radio signal (s1(t)), in particular a part of said predetermined radio signal which has been propagated through a portion (31) of soil (30);
- a step of determining or calculating the amount of water ($x_{water}$) and/or humidity and/or dielectric constant ($\varepsilon'$) of the portion (31) of soil (30) interested by the radiation of the first antenna, said portion (31) of soil (30) being positioned between the first antenna (101) and the second antenna (102),
- wherein the step of determining or calculating the amount of water ($x_{water}$) and/or humidity and/or dielectric constant ($\varepsilon'$) of the portion (31) of soil (30) is performed by electronically measuring the speed of propagation of said predetermined radio signal (s1(t)) between said first antenna (101) and said second antenna (102) or the delay with which the signal transmitted by said first antenna (101) or through a transmitter (103) connected to said first antenna (110) reaches said second antenna (102) or a receiver (104) connected to said second antenna (102).

According to a further aspect, the method may comprise the step of calculating an average granulometry of said portion (31) of soil (30) through the measurement of at least said dielectric constant of said portion (31) of soil (30).

According to a further aspect, the method may comprise repeatedly performing said step of calculating said average granulometry at a plurality of depths for said first antenna (101) and said second antenna (102); said repeated performance of said step of calculating the average granulometry for the portion (31) of soil (30) producing a profile, in particular an electronic profile of a soil (30) which correlates the average granulometry of the soil (30) with the depth of measurement of the average granulometry.

According to a further aspect, the method may comprise storage of a plurality of electronic data concerning an average of a plurality of size values for a set of granules of soil, and electronically processing the electronic data with said dielectric constant for obtaining said average granulometry.

The present disclosure relates to an electromagnetic soil analysis device(100) comprising:

- a transmitter (103) configured to transmit a predetermined radio signal (s1(t)) and configured to be connected - in use - with a first antenna (101);
- a receiver (104) configured to receive at least a part of said predetermined radio signal (s1(t)) after a propagation into a portion (31) of soil (30) and configured to be connected - in use - with a second antenna (102), and
- a data processing unit (111) configured to calculate an amount of water ($x_{water}$) and/or humidity and/or dielectric constant ($\varepsilon'$) of the portion (31) of soil (30) by automatically and electronically calculating the speed of propagation of said predetermined radio signal (s1(t)) between said transmitter (103) and said receiver (104) or by calculating the delay with which the predetermined radio signal (s1(t)) transmitted by said transmitter (103) reaches said second antenna (102) or a receiver (104) connected to said second antenna (102).

According to a further aspect, said device is a radar, in particular a cross-hole soil analysis radar.

According to a further aspect, the predetermined radio signal (s1(t)) is a signal sweeping between a first lower predetermined frequency (f1) and a second higher predetermined frequency (f2).

According to a further aspect, the first lower predetermined frequency ($f_1$) is higher than 50MHz.

According to a further aspect, the second upper predetermined frequency ($f_2$) is lower than 1000 MHZ.

According to a further aspect, the transmitter (103) is configured for transmitting said predetermined radio signal (s1(t)) as a signal sweeping in frequency, between a first lower predetermined frequency ($f_1$) and a second higher predetermined frequency ($f_2$).

According to a further aspect, said sweeping follows a predetermined law of frequency variation over time.

The data processing unit (111) of the electromagnetic soil analysis device (100) is configured for:

- loading a first electronic datum concerning the dielectric constant of the water ($\varepsilon'_{water}$) and a second electronic datum concerning the dielectric constant of the soil ($\varepsilon'_{soil}$), and a third datum corresponding to a distance (d) between the first antenna (101) and second antenna (102),

- calculating the amount of water ($x_{water}$) according to the following formula:

$$x_{water} = d - \frac{d(\varepsilon' - \varepsilon'_{water})}{\varepsilon'_{soil} - \varepsilon'_{water}}$$

wherein: d corresponds to the distance between the first antenna (101) and second antenna (102) when in said first borehole (10) and respectively second borehole (20) and or a distance between the first borehole (10) and the second borehole (20); $\varepsilon'$ corresponds to the average dielectric constant of the portion of soil (30) directly determined and/or derived by electronically measuring the speed (v) of propagation of said predetermined radio signal (s1(t)) between said first antenna (101) and said second antenna (102) or the delay ($\Delta t$) with which the predetermined radio signal (s1(t)) transmitted by said first antenna (101) or through a transmitter (103) connected to said first antenna (110) reaches said second antenna (102) or a receiver (104) connected to said second antenna (102); $\varepsilon'_{water}$ corresponds to said first electronic datum concerning the dielectric constant of the water; $\varepsilon'_{soil}$ corresponds to said second electronic datum concerning the dielectric constant of the soil.

According to a further aspect, the receiver (104) comprises a vector analyzer configured for, or is configured for, electronically decomposing the received signal in a first - in-phase - component (I) and a second - quadrature - component (Q) and/or providing on its output a first - in-phase - component (I) and a second - quadrature - component (Q).

According to a further aspect, the receiver (104) is configured for performing sampling of the received signal in a plurality of predetermined instants of time, for producing sampled versions of said first - in-phase - component (I) and a second - quadrature - component (Q).

According to a further aspect, the receiver (104) and/or the data processing unit (111) are configured for performing a discrete inverse Fourier transform on at least a part of the signal received by said receiver (104) or received through said second antenna (103), said discrete inverse Fourier transform producing in output samples in the time domain for electronically calculating the speed of propagation of said predetermined radio signal (s1(t)) between said transmitter (103) and said receiver (104) or for calculating the delay with which the predetermined radio signal (s1(t)) transmitted by said transmitter (103) reaches said second antenna (102) or said receiver (104) connected to said second antenna (102)

According to a further aspect, the device (100), in particular the data processing unit (111) is configured to electronically calculate the dielectric constant of the portion (31) of soil (30) by:

- dividing a first electronic datum corresponding to the distance (d) between the first antenna (101) and second antenna (102) when in said first borehole (10) and respectively second borehole (20) and or a distance between the first borehole (10) and the second borehole (20) by the delay ($\Delta t$) with which the predetermined radio signal (s1(t)) transmitted by said first antenna (101) or through a transmitter (103) connected to said first antenna (110) reaches said second antenna (102) or a receiver (104) connected to said second antenna (101), for obtaining a first sub-result;

- dividing, in particular electronic dividing, a number corresponding to the speed of light in vacuum by said first sub-result, obtaining a second sub-result;

- calculating, in particular electronically calculating the power of 2 to said second sub-result, to obtain said dielectric constant of said portion (31) of soil (30).

According to a further aspect, a radar soil analysis system (200) is disclosed, said system (200) comprising the electromagnetic soil analysis device (100) described above and:

- a first antenna (101), electrically connected to said transmitter (103); and
- a second antenna (102), electrically connected to said receiver (104).

According to a further aspect, the first and/or second antenna (101, 102) are dipole antennas.

According to a further aspect, the first and/or second antenna (101, 102) are broadband antennas, optionally dipole broadband antennas, optionally conical and/or biconical dipole antennas.

According to a further aspect, the first antenna (101) and the second antenna (102) are of the same type and/or with the same size.

According to a further aspect, the broadband antennas have a bandwidth greater than 100 MHz, preferably greater than 200 MHz, more preferably greater than 300 MHz.

According to a further aspect, the first antenna (101) and the second antenna (102) have an almost constant radiation pattern along at least one radiation plane, in particular the H-Plane, and/or have a radiation gain/attenuation as a function of an angle of observation over at least one radiation plane, in particular the H-Plane, which is substantially constant.

## Description of figures

In the subsequent detailed description at least one preferred and non-limiting embodiment of the invention will be presented, and described with reference to the annexed figures wherein:

- Figure 1 shows a schematic view of an electromagnetic soil analysis device according to the invention.
- Figure 2 shows a schematic view of a radar soil analysis system according to the invention.
- Figure 3 shows a graph indicating the variation of the dielectric constant $\varepsilon'_{soil}$ of four predetermined types of soils according to different grain sizes from 0 to 4mm and from 8mm to 16mm (four curves) as a function of the water content.
- Figure 4 reports the maximum reachable distance as a function of the frequency for a radar configuration according to the invention.
- Figure 5 and figure 6 respectively show measurements performed in a test site by the radar object of the invention and through the SPT standard procedure.
- Figure 7 shows a graph identifying a composition of the soil in a test site as a function of the depth of analysis.
- Figure 8 shows a graph identifying average granulometry and average dielectric constant of the soil in the same test site where the composition of figure 7 was measured, as a function of the depth of analysis, as measured through the radar object of the present invention.
- Figure 9 shows an example of a screenshot of an exemplary embodiment showing the data that may be produced by the radar object of the invention.
- Figure 10 shows a brief flow diagram of a method according to an example.

## Detailed description

An electromagnetic soil analysis device is referenced under number 100, in particular a radar and more specifically a cross-hole soil analysis radar. The radar 100 is conceived and specifically configured for letting a user perform an analysis of soils, in particular for determining the amount of humidity of a portion of soil and/or percentage of water in a portion of soil, primarily when the soil is saturated with water.

The radar 100 comprises a RF board, provided with at least one transmitter 103 and one receiver 104; the transmitter 103 is configured to transmit a predetermined signal s1(t) which is a radio signal lying in a predetermined band, i.e. comprised between a first minimum frequency and a second maximum frequency; the receiver 104 is configured to receive radio signals, in particular in the band wherein the transmitter 103 transmits. The radar 100 further comprises a power management unit 105, electrically connected at least to the receiver 104 and to the transmitter 103 for feeding them electrical energy required to operate.

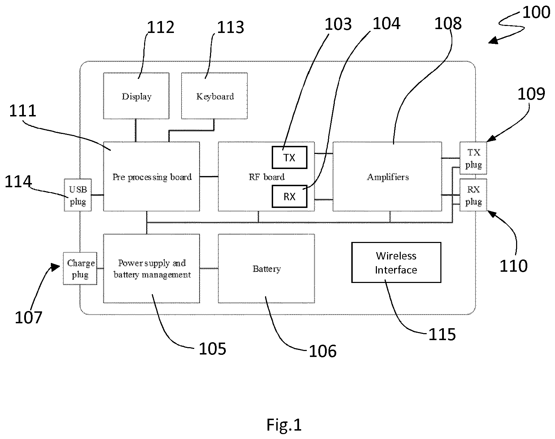

Although the radar 100 may operate only through connection to a net power source, in a preferred embodiment shown in figure 1, the radar 100 is provided with a battery 106, electrically connected to the power management unit 105, and to a mains input 107, electrically connected directly to the power management unit 105. This also allows operation in environments where electrical power coming from the net may not be present, and gives flexibility of operation, especially on the field. Battery 106 may be charged from the net power surge, through a connection with the mains input 107. The power management unit 105 may be configured to provide a conversion from the standard net voltage (e.g. 220-240V /110-120V AC, 50/60Hz) to a direct current powering signal, whose voltage may depend on the type and rated voltage of the battery which is actually used. Furthermore, power management unit 105 may be configured to perform lowering of voltage, e.g. to 12 Vdc and/or to prevent excessive recharging of the battery 106, to prevent accidental inversion of polarity of the battery 106 or to prevent peaks of signal power directly arriving to the transmitter 103 or to the receiver 104.

The radar 100 preferably comprises an amplification stage 108, which in figure 1 is electrically connected to the RF board; the amplification stage 108 may typically comprise a power RF amplifier for the transmitter 103 and a low-noise RF amplifier for the receiver 104, and may be provided, if so required by the specific design of the device, by an RF circulator. In any case, the applicant suggests that the transmitter 103 may integrate a built-in RF power amplifier and/or the receiver may integrate a built-in low noise RF pre-amplifier.

The transmitter 103 and the receiver 104 are respectively connected to a first RF output 109 and to a second RF input 110. In the embodiment shown in figure 1, this connection is indirect, and the direct connection with RF output and RF input is provided by the amplification stage 108. In the actual realization, the RF output and RF input may be provided with standard RF plug or sockets like, preferably and in a non-limiting extent, N-type connectors or any other type of RF connector which may be suitable for the application. Preferably, the first RF output and the second RF input are physically separated. Such a physical separation may be convenient provided that, as it will be better described in the subsequent portion, the radar 100 may be connected in use to separate antennas which shall be placed in separated boreholes.

The radar 100 further comprises a data processing unit 111, electrically connected to the RF board and fed through the power management unit 105; the data processing unit 111 is configured to manage and control operative parameters of the transmitter 103 and of the receiver 104, and is further configured to process the signal received from the receiver 104 in order to provide data suitable to better characterize the soil under examination. Furthermore, the radar 100 may comprise a data I/O port, e.g. a USB port 114, which is electrically connected to the data processing unit 111, with the purpose of rendering data provided thereby available to other computers or electronic units.

Optionally, albeit preferably, the radar 100 may comprise user interfaces like, e.g., a display 112 and a keyboard 113. All the devices previously cited may be integrated in a box, e.g. a waterproof box, and may be conceived for being suitable to operate in the field, e.g. they may have appropriate IPxx protection against dust and water.

Optionally, albeit preferably, the radar 100 may comprise a wireless interface, for example a Wi-Fi, or WiMax interface, that may integrate a protected or ciphered communication protocol; the wireless interface 115 is electrically connected at least with the data processing unit 111. Wireless interface 115 is configured to let the radar 110 be remotely controlled, e.g. at least remotely activated or deactivated and/or to switch on/off or to remotely control some parameters of the transmitter 103. Wireless interface may be arranged at a frequency and/or radio band significantly differing from the frequencies used for the signal injected in the first antenna (101), since in such a way it may be possible to prevent interferences with the measurements.

Although not being represented in the schematic diagram of figure1, to the data processing unit 111 may be electrically connected a memory which may be used to store data important to actually make the radar 100 operate, i.e. operative parameters for the transmitter 103 and/or for the receiver 104, as well as other data as an operative system to make the radar operate stand-alone.

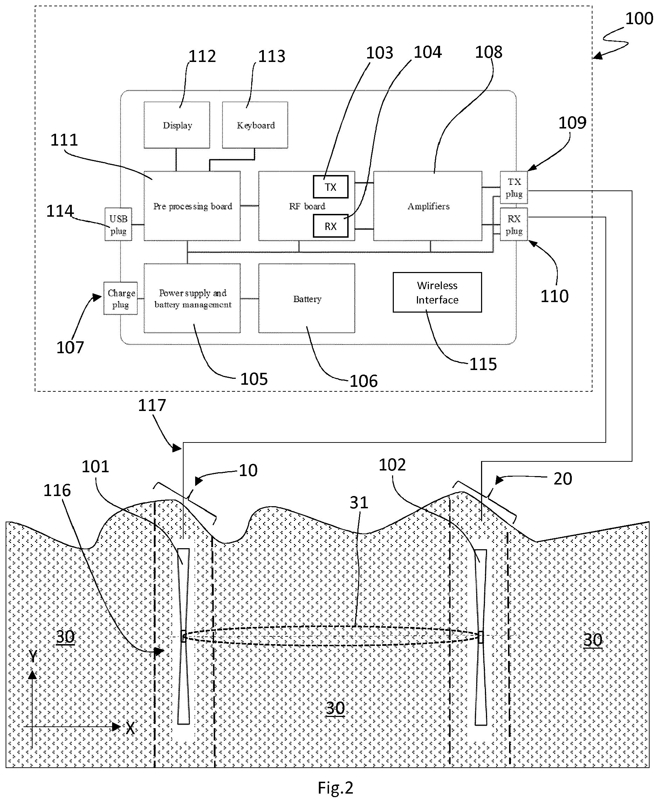

Figure 2 shows a soil analysis radar system, which comprises the radar 100 as previously described. The soil analysis radar system further comprises a first antenna 101 and a second antenna 102: the first antenna 101 is in use detachably connected to the RF output 109 and the second antenna 102 is detachably connected to the RF input 110. A first cable 117 of appropriate length connects the first antenna 101 to the RF output 109 and a second cable 117 of appropriate length connects the second antenna 102 to the RF input 110. Cables 117 are standard RF cables which the technician may choose for the particular frequency of the signal generated by the radar. Cables 117 may for example be RG58, RG8, H155, RG213, or other type of coaxial cables.

The applicant performed several studies about which type of antenna may be used for this specific application, selecting between dipoles, monopoles, loop, spiral, fractal, biconical and combinations of spirals and dipoles. Other types of antennas were discarded provided that in any case the antenna may be slanted since the boreholes have a relatively small diameter, typically about 70mm.

Preferably but in a non-limiting extent, the first and the second antenna may be of the same type, and in particular at least one of them may be a dipole antenna, in particular a center-fed dipole antenna, whose branches may be realized through conical or truncated conical sticks fed in correspondence of their vertexes or in correspondence of their smallest base. Such an antenna resulted having a bandwidth of some hundreds of MHz, suitable to be used for the predetermined radio signal s1(t) also in case it is swept in frequency. Preferably, but in a non-limiting extent, the required bandwidth for the antenna may be greater than 100 MHz, preferably greater than 200 MHz, and even more preferably greater than 300 MHz.

Moreover, using a dipole ensures minimum affection of measurement if the antenna is rotated along it axis of maximum development, provided that the radiation pattern of such a dipole presented an almost constant value of gain over the entire 360° azimuth of the H-plane. Furthermore, relatively large HPBW angle over E-plane further allows for having minimum affection of measurements in case the antenna is slightly misaligned with respect to the borehole axis.

In order to make the antennas suitable to operate in an hostile environment like the soil, especially since antennas operate in an environment characterized by presence of water or humidity, the first and the second antenna are provided with a waterproof case 116. In order to prevent or reduce as much as possible interference with the propagating radio waves respectively sent and received by the antennas, the waterproof case 116 may be preferably made in plastics, e.g. PVC. In a test performed by the applicant, the waterproof case 116 was 600mm long and 60mm wide. In any case, in order to let the waterproof case 116 pass within the boreholes, the minimum diameter of the borehole shall be greater than the maximum diameter of the waterproof case 116. In any case, relevant margin between the minimum diameter of the borehole and the maximum diameter of the waterproof case 116 should be kept in order to avoid any risk of having the case stuck in the borehole. Applicant performed tests on the antenna in direct contact with water, and with a waterproof case 116 filled with air, and discovered that water affects the antenna gain in function of the frequency; therefore, having a waterproof case 116 may allow obtaining a significantly more precise measurement.

The first and the second antenna 101, 102, when in the form of a dipole, extend substantially axially along a reference axis Y which in use, as it will be clearer from the following portions of description, are co-axial or substantially co-axial with the axis of the boreholes wherein they shall be introduced in order to perform the analysis of the soil.

Figure 2 further depicts the typical installation of the system 200 in the field, wherein the first antenna 101 and the second antenna 102 are arranged with their waterproof cases 116 introduced in a respective first borehole 10 and second borehole 20 pre-emptively practiced in the soil. Preferably such boreholes 10, 20 axially extend along a direction substantially coinciding with the vertical direction, although other directions may be used for performing different analysis of soils. The applicant recommends, although in a non-limiting extent, the preferred use of boreholes within 50mm and 80mm in diameter, although other diameters may be used. The first and the second borehole 10, 20 are arranged at a predetermined distance d, which in use may be some meters long, e.g. 5m. Optionally, albeit preferably, to the first and second antennas 101, 102 may be attached weights to provide tensioning, which are especially useful in case the boreholes are performed along a vertical direction.

The radar 100 provides information about the humidity of the ground where soil under exam is not characterized by the presence of groundwater or aquifers, or about the percentage of water of the soil when in presence of groundwater or aquifers.

The concept exploited by the radar 100 is based on propagation of electromagnetic radio waves, which is affected by the dielectric constant, in particular the average dielectric constant, of the portion of soil interested by the propagation of the radio waves. The dielectric constant is directly related to the humidity (when in partially saturated conditions) or water content (in saturated conditions) of the interested portion of soil. In particular, when dealing with water saturated soil, void ratio can be directly obtained.

The average dielectric constant mainly depends on the volumetric ratio between water and soil particles. Dielectric constant of the water is about 30 times greater than the dielectric constant of the soil particles, and the content of water or humidity in a portion of soil is determined in good approximation by evaluating the measured propagation speed v [m/s] of the electromagnetic radio waves which is related to the dielectric constant by the following equation, given c as light speed in vacuum and $\varepsilon$ as the dielectric constant:

$$v = \frac{c}{\sqrt{\varepsilon'}} \quad (1)$$

Actual radio wave propagation speed is further affected by various delays which are caused by cables, antennas and air. In the context of the present disclosure, their influence is not taken into account since their influence may be measured or anyway determined and therefore compensated.

Dry soil is provided with its own dielectric constant, herewith referred as $\varepsilon'_{soil}$ (typically, albeit non-limiting, ranging between $\approx 3 \div 5$), and is determined before the performance of the analysis and stored by means of known techniques in the memory of the radar 100 in order to be deciphered by the data processing unit 111 as a predetermined datum. The dielectric constant of the water $\varepsilon'_{water}$ is typically also known, and is $\approx 80$. The dielectric constant of the water $\varepsilon'_{water}$ is stored by means of known techniques in the memory of the radar 100 in order to appear to the data processing unit 111 as a predetermined datum, together with $\varepsilon'_{soil}$.

When a predetermined portion of soil is analyzed, it can be inferred that in a predetermined distance d, e.g. up to 10m or even 20m, when in presence of groundwater or aquifers, a first part $x_{water}$ of this distance d is actually a void filled by water (100%), while a second, and resting, part $x_{soil}$ is actually soil. The first and the second part are, in principle, the unknown variables to be determined.

Since the radar 100 directly measures time $\Delta t$ the radiowaves need to travel for the distance d, i.e. the time required for the first predetermined signal s1(t) to travel from the first antenna 101 to the second antenna 102 or (with compensation) the time required to travel from the transmitter 103 to the receiver 104, and so determines the speed

$v = \frac{d}{\Delta t}$ of propagation of the radiowaves, through the following calculation (derived by reversing equation (1)):

$$\varepsilon' = \left(\frac{c}{v}\right)^2 \quad (2)$$

it measures an average dielectric constant $\varepsilon'$ of the portion 31 of soil 30 given by:

$$\varepsilon' = \frac{(x_{water} \cdot \varepsilon'_{water} + x_{soil} \cdot \varepsilon'_{soil})}{d} \quad (3)$$

The first and the second part $x_{water}$, $x_{soil}$ of the distance, and therefore the amount of water in a predetermined portion of soil are calculated through the following equations:

$$x_{soil} = \frac{d(\varepsilon' - \varepsilon'_{water})}{\varepsilon'_{soil} - \varepsilon'_{water}} \quad (4)$$

$$x_{water} = d - x_{soil} \quad (5)$$

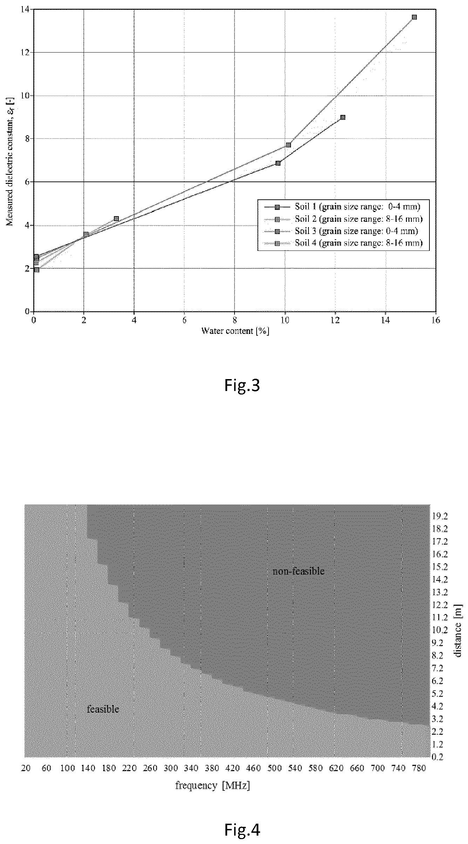

Figure 3 shows a graph indicating the variation of the dielectric constant $\varepsilon'_{soil}$ of four predetermined types of soils according to different grain sizes from 0 to 4mm and from 8mm to 16mm (four curves) as a function of the water content. In particular, figure 3 is exemplificative and shall not be interpreted in a limiting extent. Heterogeneous types of soils are characterized, when dry (0% of water or humidity) by a dielectric constant $\varepsilon'_{soil}$ which for the purposes of the present disclosure may be considered almost constant: among the various types of soils which Applicant kept in consideration, when dry, $\varepsilon'_{soil}$ ranges substantially between [1,9 - 2,9] and therefore may be considered, for the purposes of the operation of the radar according to the disclosure, as a constant, because even if with small amounts of water (<8%) $\varepsilon'_{soil}$ gets at least 2-3 times greater for any type of soil.

This means that the dielectric constant of the soil $\varepsilon'_{soil}$ when dry may be set as default data (e.g. $\varepsilon'_{soil}$ = 2.2) in the memory, and correction may be made by the user in order to force the data processing unit 111 perform the above calculations according to a value dielectric constant of the soil which is different by the default value, in order to obtain more precise indications of the amount of water or humidity of the analyzed soil.

In general terms, the operation of the radar 100 and system 200 is performed according to the following steps:

- a step of making a first hole 10 in a first predetermined position in the ground 30;
- a step of making a second hole 20 in a second predetermined position in the ground 30, the second position being different from the first position;
- a step of introducing a first antenna 101 in the first borehole and a second antenna 102 in the second borehole;
- a step of feeding a predetermined radio signal to the first antenna 101, so that the first antenna 101 radiates the predetermined radio signal s1(t) according to a predefined radiation pattern;
- a step of determining the percentage and/or amount of water $x_{water}$ and/or humidity and the dielectric constant $\varepsilon'$ of a portion 31 of soil 30 interested by the radiation of the first antenna, the portion of soil being positioned between the first antenna 101 and the second antenna 102.

More specifically, the determination of the percentage and/or amount of water and/or humidity of the portion 31 of soil 30, is electronically performed through the data processing unit 111, which is configured to:

- activate the transmitter 103 in order to make it send to the first antenna 101 the predetermined radio signal s1(t);
- analyze the signal received by the receiver 104 through the second antenna 102;
- calculating the time which lapses between the transmission of the predetermined signal s1(t) and the receipt of the predetermined radio signal s1(t);
- then, retrieving from the memory the distance d as a known datum; and retrieving from the memory the dielectric constant of the soil $\varepsilon'_{soil}$, and to
- extrapolate the amount of distance which is in average covered by water, or void, or extrapolate the humidity of the soil by performing the calculation according to equation (3).

According to an important procedural aspect, before starting the measurement in the soils, a step of calibration of the radar 100 should be made by setting the first antenna 101 and the second antenna 102 at a distance equal to the distance d of the first to second borehole, with only free air between the antennas 101, 102. Therefore, transmitter 103 is activated in order to perform a single measurement. Then the antennas in use are introduced in the boreholes 10, 20 according to the previously cited process steps. With the step of calibration here disclosed, data processing unit 111 may automatically electronically compensate the humidity and dielectric constant of the air from the dielectric constant of the soil.

According to a specific and non-limiting embodiment of the disclosure, the data processing unit 111 is configured to electronically calculate the percentage of water, in particular the average percentage of water in the selected portion of soil, by further calculating at least the first and eventually the second of the two subsequent equations:

$$\%_{water} = \frac{100 \; x_{water}}{d} \quad (6)$$

$$\%_{soil} = 100 - \%_{water} \quad (7)$$

During the operation of the radar 100, the first antenna 101 and the second antenna 102 may be moved through the first and second boreholes 10, 20 in order to analyze different "slices" of the soil, at different depths from the ground level. In a simplified operation scheme which considers the two dipoles radiating only in the direction of maximum radiation orthogonal to the direction of development, the slice of soil analyzed is the slice that lies over the line which joins the two dipoles. Nevertheless, radio waves may not propagate from the dipole in a completely linear space, due to a plurality of factors which may include, in a non-limiting extent, the actual radiation pattern of the antenna and potential reflection, refraction and/or diffraction phenomena.

In particular, the portion 31 of soil 30 is a portion of soil extending, in a direction parallel to a first reference axis X, along an ideal line joining the first antenna 101 to the second antenna 102 and vertically extending, in a direction parallel to a second reference axis Y, for an amount of space including reflection and/or refraction points which are maximally separated from the line joining the first 101 to the second antenna 102 which respectively reflect and/or refract the predetermined radio signal transmitted by the first antenna 101 in such a way that may be detected through the second antenna 102 and/or through the receiver connected to the second antenna 102 beyond a predetermined sensitivity point of the receiver.

In a preferred and non-limiting process of soil analysis, the first and the second antenna 101, 102 are progressively, and more particularly simultaneously or synchronously lowered in their respective first, or second boreholes 10, 20, although they may not have the same depth from the ground. It means that the reference axis X is substantially horizontal. The procedure of operation of the radar 100 and system 200 includes therefore the steps of moving the first antenna 101 and the second antenna 102 in such a way so that during their synchronous motion, the ideal line connecting the first antenna 101 and the second antenna 102 when they are in at a respective first and second predetermined depth in their respective first borehole 10 and second borehole 20 at a first time of measurement, is parallel to the ideal line connecting the first antenna 101 and the second antenna 102 when they are in at respective third, fourth predetermined depth in their respective first borehole 10 and second borehole 20 at a second time of measurement different from the first time of measurement. Slices of soils are therefore inclined with respect to the horizontal direction, and such a way of analyzing the soil may be proper when dealing with groundwater or aquifers relevantly inclined and having different depths in correspondence of the first and second boreholes, or when measurements are made in correspondence of soils which are known to have a plurality of inclined layers.

If, in a more particular way of analyzing the ground, the user wishes to analyze horizontal slices of soil at different depths, the first antenna 101 and the second antenna 102 are moved in their respective first borehole 10 and second borehole 20 in such a way to keep a same depth from the ground level. In this particular case, the first and second predetermined depths respectively held by the first and second antenna 101; 102 at the first time of measurement are substantially placed at a same first depth and the third and fourth predetermined depths respectively held by the first and second antenna 101; 102 at the second time of measurement are substantially placed at a same second depth, the second depth differing from the first depth.

The motion of the first and second antenna 101, 102 in the respective boreholes may be continuous or discontinuous. If continuous, conveniently the system 200 may be provided by remotely controllable means for moving the antennas through the boreholes, which may include in a non-limiting extent, drums actuated by electric motors over which the cable connected with the antenna is partially wound. Otherwise, the cable may report markings over e.g. 2 meters, for letting the user identify the depth at which the antenna is actually positioned in the borehole. In any case, when antennas are moved discontinuously, depth variation steps of in the range of [0,5 - 1] m appear to be sufficient to provide a sufficient detailed analysis of the soil for the vast majority of applications for which the present radar 100 is actually conceived. Figure 4 reports a graph of frequencies which Applicant considered the most effective for the specific purpose to which the radar 100 is actually conceived. In particular graph of figure 4 reports the maximum reachable distance as a function of the frequency for a radar configuration wherein the predetermined radio signal s1(t) is injected in the cable with a power of 0dBm. The cables have a lengths of 30m each, such a length corresponding to the maximum depth of each of the first and second boreholes 10, 20. In the tests performed by the Applicant, receiver sensitivity was -80dB, therefore maximum overall attenuation was set as 80dB. Therefore, in figure 4, allowable zones are those which the received signal power was >80dBm while those which are not allowable are those wherein the received signal power was <80dBm.

From figure 4 and independently from the sensitivity of the receiver 104, it results that the curve delimiting the allowable zone from the non-allowable zone is inversely proportional with respect to increasing frequency, in a range between 50-1000 MHz, which is the range that preferably should be used to operate the radar.

Distance d between the first borehole 10 and the second borehole 20 affects the measurement of the signal attenuation. Measurements were taken keeping constant the power of the transmitted predetermined signal. Measurement were taken at distances *d* of [5; 10; 15] m. For frequencies up to 250 MHz, it resulted that increasing 5m in the distance d produces an average increase of attenuation of about 20 dB.

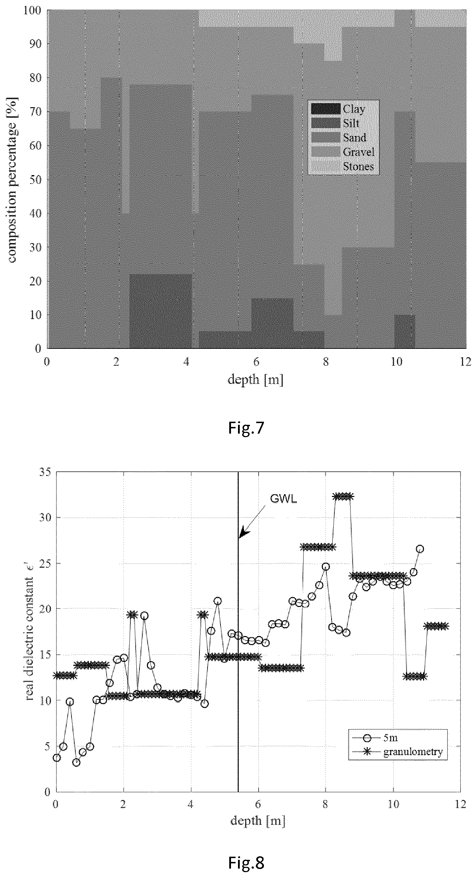

The average dielectric constant of the soil is further affected by the soil granulometry, i.e. size distribution in a collection of grains. Figure 7 depicts actual soil composition for a site test, as a function of the depth of analysis, with distinction of clay, slit, sand, gravel and stones. Figure 8 shows the average dielectric constant measured in the same site test, and average granulometry calculated through the radar 100.

The applicant provided for a classification of clay, silt, sand, gravel and stones according to an average size of grains: clay about 1.5 $\mu$m, silt about 8 $\mu$m, sand about 0.8mm, gravel about 16mm and stones about 60mm. Average granulometry g is calculated as a function of the following equation that keeps into account the previously cited average sizes of grains:

$$g = \frac{\%_{clay} \cdot 1.5 \mu m + \%_{slit} \cdot 8 \mu m + \%_{sand} \cdot 0.8 \mu m + \%_{gravel} \cdot 16 mm + \%_{boulder} \cdot 60 mm}{100}$$

Through the measurements provided in figure 8, obtained in controlled conditions, it has been possible to quantify the accuracy of the radar. It has been shown that the water content can be determined with a precision of about 5%.

Therefore, the Applicant provided for a specific configuration for the radar 100, which in a particular and non-limiting embodiment may store a plurality of size values for a set of granules of the soil 30, and the data processing unit may be configured to calculate the average granulometry of the soil, according to the above equation, through the measurement of the average dielectric constant of the soil. The step of calculating the average size of grains, may be repeated at different depths, through the procedure of motion of the first antenna 101 and second antenna 102 in their respective first, second boreholes 10, 20 as previously described.

The applicant underlines that the attenuation provided by the soil, the dielectric constant of the soil and the delay of propagation of the predetermined radio signal s1(t) are independent from the direction of measurement, i.e. should result the same if the first antenna 101 and second antenna 102 are switched in their connection with the RF output 109 and RF input 110. A further optional step may include switching the connection of the first antenna 101 from the RF output 109 to RF input 110 and switching the connection of the second antenna 102 from the RF input 110 to the RF output 109 in order to perform the measurement for a second time keeping the depth constant. If a value of measured dielectric constant $\varepsilon'$ is obtained, i.e. another value of $\%_{water}$, $\%_{soil}$, $x_{soil}$, $\%x_{water}$ is obtained, the outputted measurement may be or may further include an average of the previously obtained values.

Through the motion of the first antenna 101 and the second antenna 102 it is possible to obtain a 2D, i.e. a two-dimensional diagram of the portion of soil under analysis, comprising a first and a second coordinate along a first and a second reference axis reciprocally orthogonal, wherein the first coordinate (e.g. X axis) refers to the depth of measurement and a second coordinate (e.g. Y axis) refers to the measured dielectric constant, and/or amount of water or percentage of water, and/or soil composition.

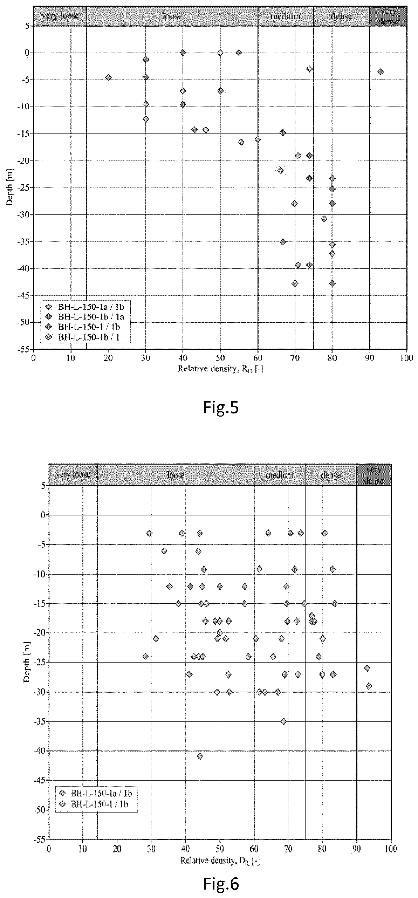

Figure 5 and figure 6 respectively show measurements performed in one among various test sites the Applicant used to check the performance for the radar 100 and through the SPT standard procedure. In particular, graphs pose relative density of the soil in abscissa and depth of measurement in ordinate. Three boreholes were performed in different areas of the test site, and these boreholes are indicated in the annexed figures with markings BH-L-150-1, BH-L-150-1a, BH-L-150-1b. Line measurements between the boreholes were referenced with markings BH-L-150 1/1b, BH-L-150 1a/1b, BH-L-150 1b/1, BH-L-150 1b/1a. Measurements were made in both directions. The two diagrams, yet at a glance, show that measurements performed through the technique according to the present disclosure provide significantly less scattering, and a more accurate insight into the relative density distribution with depth. The upper 10m to 15 m are generally loos to medium dense, while, as expected, the compactness of the soil increases with depth. Locally noticeable decreases are due to the presence of material with significantly greater average size. In particular, in the test site the rather high density observed between 3m and 4m can be explained by presence of a very finely grained lacustrine deposits. These findings are in line with the information extracted and derived from the core boxes.

A preferred embodiment of the radar may be configured to provide for transmitting the predetermined radio signal s1(t) in such a way that it is swept in frequency between a first lower predetermined frequency f1 and a second higher predetermined frequency f2. The signal is swept in frequency according to a predetermined law of frequency variation over the time that may be for instance and in a non-limiting extent a linear law. Applicant found that sweeping the signal in frequency may provide for obtaining better measurements, provided that is possible to have a plurality of measurements over the time, in such a way to calculate for a predetermined depth of measurements a plurality of delays of propagation for the predetermined radio signal s1(t) according to different frequencies, and for letting the data processing unit 111 provide for calculating an average between such measurements with the final purpose of providing more reliable data.

In particular, the frequency sweeping may be performed by virtue of a vector analyzer; in this latter case the frequency sweeping is a stepped frequency sweeping. When using a vector analyzer the applicant identified a default number of 1024 analysis points as standard for the stepped sweeping, but this number shall not be intended as limiting for the purpose of the disclosure.

Preferably but in a non-limiting extent, the predetermined radio signal s1(t) is numerically or equivalently digitally processed and the receiver 104 may be configured to decompose the received radio signal in a first - in-phase - component I and a second - quadrature - component Q. The in-phase component I and the quadrature component Q are sampled in a plurality of predetermined instants of time for each of which their instantaneous frequency variates in function of the stepped frequency sweep. The receiver 104 may be further configured to perform a discrete inverse Fourier transform on each of the in-phase component I and quadrature component Q producing time-domain samples. Delay between the transmission and the moment at which the samples are received allows to calculate or determinate the dielectric constant as above explained, i.e. through the speed or delay in propagation for the predetermined radio signal s1(t). Applicant found that numerically processing the signal received by the receiver 104, in particular when also the predetermined radio signal s1(t) is transmitted with numeric processing, proved to be the most robust and effective way of treating the signal in order to achieve precision of measurement.

Albeit it has been indicated that the receiver 104 performs the discrete inverse Fourier transform on the in-phase component I and quadrature component Q of the signal, such a particular solution shall not be considered limitative, provided that the in-phase component I and quadrature component Q may be fed to the data processing unit 111 in order to let this latter perform the discrete inverse Fourier transform or any other and/or further processing on the received signal.

Otherwise, according to another non-limiting alternative, the delay of propagation for the predetermined radio signal is calculated by considering the phase delay that the received signal presents with respect to the transmitted predetermined radio signal s1(t).

In such a configuration, it may be preferable to have the first antenna 101 and the second antenna 102 designed as broadband antennas, in order to efficiently transmit and receive the signal over the entire range of frequencies between the first lower predetermined frequency and the second higher predetermined frequency. Dipoles may be used, but it may be preferable to have those dipoles constructed with conical branches, which provide wider bandwidth with respect to traditional cylindrical dipoles.

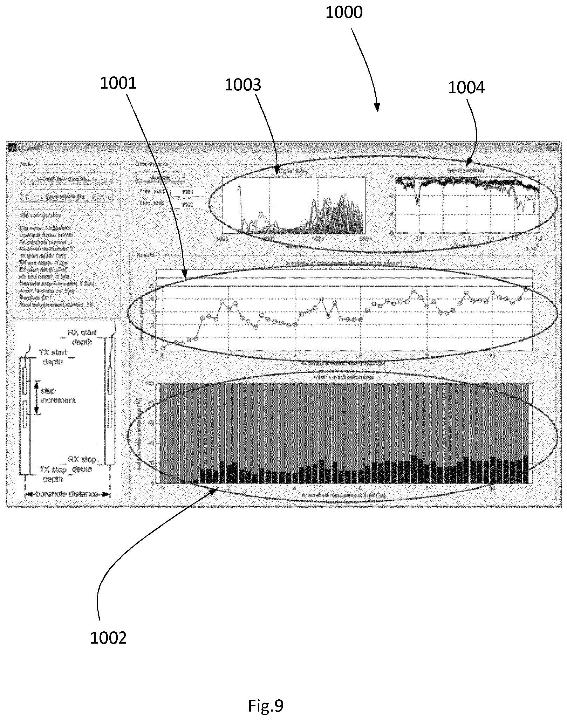

A typical report provided through the display of the radar 100 is shown in figure 9. Advantageously, in order to let the user have full and immediate analysis of the engineering features of the soil under analysis, the radar 100 may be configured, through the data processing unit 111, to produce a plurality of diagrams, preferably but in a non-limiting extent, produced in a single video screen over the display, or in any case combinable together, including:

- a first graph 1001 correlating the dielectric constant measured for a plurality of depth of analysis for portions 31 of soils 30 each one arranged at a predetermined depth from the ground with the depth at which the analyzed portion 31 lies;
- a second graph 1002 correlating the amount and/or percentage of water and soil in a predetermined portion 31 of soil 30 with the depth at which the analyzed portion 31 lies;
- a third graph 1003 correlating the delay of reception - by the second antenna 102 and/or the receiver 104 - of the predetermined radio signal s1(t) transmitted by or through the first antenna 102 and/or the transmitter 103;
- a fourth graph 1004, correlating the amplitude of the signal received - by the second antenna 102 and/or the receiver 104 with the frequency of the signal.

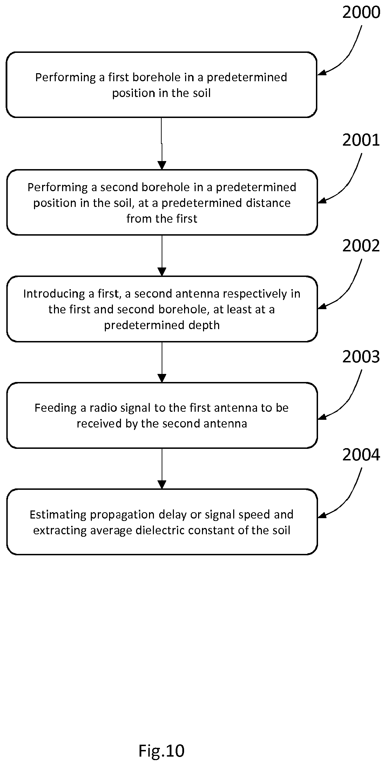

Resuming, through the radar object of the disclosure the following method of soil analysis may be performed (see also figure 10):

- a step (block 2000) for making a first borehole 10 in a first predetermined position in the soil 30;

- a step (block 2001) for making a second borehole 20 in a second predetermined position in the soil 30, the second position being different from the first position;
- a step (block 2002) for introducing a first antenna 101 in the first borehole 10 and a second antenna 102 in the second borehole 20;
- a step (block 2003) for feeding a predetermined radio signal to the first antenna 101, so that the first antenna 101 radiates the predetermined radio signal according to a predefined radiation pattern across a portion 31 of the soil 30, so that the predetermined radio signal s1(t) may be received by the second antenna 102;
- a step (block 2004) for determining or calculating the amount of water $x_{water}$ and/or humidity and/or dielectric constant $\varepsilon'$ of a portion 31 of soil 30 interested by the radiation of the first antenna, the portion 31 of soil 30 being positioned between the first antenna 101 and the second antenna 102,
- wherein the step of determining or calculating the amount of water $x_{water}$ and/or humidity and/or dielectric constant $\varepsilon'$ of the portion 31 of soil 30 is performed by electronically measuring the speed of propagation of the predetermined radio signal s1(t) between the first antenna 101 and the second antenna 102 or the delay with which the predetermined radio signal s1(t) transmitted by the first antenna 101 or through a transmitter 103 connected to the first antenna 110 reaches the second antenna 102 or a receiver 104 connected to the second antenna 102.

It may be understood that the data processing unit is technically interchangeable with one or more electronic computers conceived and/or configured for executing portions of software or firmware programs loaded on a non-transitory memory support. The software program may be written in any programming language. The electronic computers, if two or more, may be electronically connected each other by means of a data exchange network and they may share they computation power; the electronic computers of the server subsystem may be therefore arranged in geographically different positions.

In particular, the software or firmware programs may be in the form of a computer program product, stored on a non-transitional memory support, comprising software code portions suitable to be executed by a data processing unit, the software code portions causing the execution of the subsequent steps:

- a step of making a transmitter 103 feed a predetermined radio signal to a first antenna 101, so that the first antenna 101 radiates a predetermined radio signal according to a predefined radiation pattern;
- a step of setting a receiver 104 connected to a second antenna 102 to receive at least a propagated part of the predetermined radio signal s1(t), in particular a part of the predetermined radio signal which has been propagated through a portion 31 of soil 30;
- a step of determining or calculating the amount of water $x_{water}$ and/or humidity and/or dielectric constant $\varepsilon'$ of the portion 31 of soil 30 interested by the radiation of the first antenna, the portion 31 of soil 30 being positioned between the first antenna 101 and the second antenna 102,

- wherein the step of determining or calculating the amount of water $x_{water}$ and/or humidity and/or dielectric constant $\varepsilon'$ of the portion 31 of soil 30 is performed by electronically measuring the speed of propagation of the predetermined radio signal s1(t) between the first antenna 101 and the second antenna 102 or the delay with which the signal transmitted by the first antenna 101 or through a transmitter 103 connected to the first antenna 110 reaches the second antenna 102 or a receiver 104 connected to the second antenna 102.

The data processing unit may be a general purpose processor specifically configured to perform - through the software program - at least part of the steps of the previously described method, or it may be an ASIC or dedicated processor, specifically designed to perform at least part of the steps of the previously described method.

The non-transitory memory support may be in particular physically internal or external with respect to the server subsystem 101 and or to the processor, and in particular it may be physically divided therefrom, in a form of a "cloud" memory.

The advantages of the radar and the method of the present disclosure are clear from the above description. In particular, the radar allows obtaining precise data in a substantially real time about the composition, in particular humidity or water amount, of the various layers that compose the soil of the ground. The radar and method object of the present disclosure are not limited to particular depths, provided that any limitation in this sense may be overcome through adoption of a sufficiently long cable for the connection with the antenna. Through the radar system and method previously disclosed it is possible to obtain two-dimensional diagrams of the soil composition in a very cost effective and time saving way. The radar herein described is easily transportable and soil analyses may therefore be performed anywhere. The indications provided by the user interface of the radar are user-friendly and easy to read on the display. The method of soil analysis exploited by the radar and system of the present disclosure does not require complex pre- or post-processing, and are therefore easy to implement.

**Claims**

1. Electromagnetic soil analysis method, the method comprising:

   - a step of making a first borehole (10) in an initial or first predetermined position in the soil (30);
   - a step of making a second borehole (20) in a second predetermined position in the soil (30), said second position being different from the first position;
   - a step of introducing a first antenna (101) in the first borehole (10) and a second antenna (102) in the second borehole (20);
   - a step of feeding a predetermined radio signal (s1(t)) to said first antenna (101), so that the first antenna (101) radiates said predetermined radio signal according to a predefined radiation pattern across a portion (31) of said soil (30) so that said predetermined radio signal (s1(t)) is received by said second antenna (102);
   - a step of soil compactness analysis, by calculating a value representative of an amount of water ($x_{water}$) and/or humidity of a portion (31) of soil (30) interested by the radiation of the first antenna, said portion (31) of soil (30) being positioned between the first antenna (101) and the second antenna (102),
   - wherein the step of calculating the value representative of the amount of water ($x_{water}$) and/or humidity of the portion (31) of soil (30) is performed by electronically measuring the speed of propagation of said predetermined radio signal (s1(t)) between said first antenna (101) and said second antenna (102) or the delay with which the predetermined radio signal (s1(t)) transmitted by said first antenna (101) or through a transmitter (103) connected to said first antenna (101) reaches said second antenna (102) or a receiver (104) connected to said second antenna (102); wherein the step of calculating the value representative of the amount of water ($x_{water}$) and/or humidity of said portion (31) of soil (30) comprises the steps of:

      - deriving an average dielectric constant $\varepsilon'$ of the portion of soil (30) by electronically measuring the speed (v) of propagation of the predetermined radio signal (s1(t)) between said first antenna (101) and said second antenna (102) or the delay ($\Delta t$) with which the predetermined radio signal (s1(t)) transmitted by said first antenna (101) or through a transmitter (103) connected to said first antenna (110) reaches said second antenna (102) or a receiver (104) connected to said second antenna (102);
      - providing: a first electronic datum concerning the dielectric constant of the water ($\varepsilon'_{water}$), a second electronic datum concerning the dielectric constant of the soil ($\varepsilon'_{soil}$), and a third datum corresponding to a distance (d) between the first antenna (101) and second antenna (102) when in said first borehole (10) and respectively second borehole (20) and/or a distance between the first borehole (10) and the second borehole (20);

   the method being **characterized in that**:
   said step of calculating the value representative of the amount of water (xwater) and/or humidity in said portion of soil (30) further comprises a step of calculating the result of the following formula:

   $$x_{water} = d - \frac{d(\varepsilon' - \varepsilon'_{water})}{\varepsilon'_{soil} - \varepsilon'_{water}}$$

   wherein $\varepsilon'_{water}$ and $\varepsilon'_{soil}$ respectively correspond to said first, second and third provided electronic datum, $\varepsilon'$ corresponds to said derived average dielectric constant of the portion of soil (30) and wherein $x_{water}$ represents a part of the distance d which is a void filled by water.

2. A method according to claim 1, comprising the steps of moving the first antenna (101) and the second antenna (102) with synchronous motion in their respective first and second boreholes (10; 20) in such a way that during their synchronous motion the ideal line connecting the first antenna (101) and the second antenna (102), when they are in at a respective first and second predetermined depth in their respective first or second hole (10; 20) at a first time of measurement, is parallel to the ideal line connecting the first antenna (101) and the second antenna (102) when they are in at respective third, fourth predetermined depth in their respective first, second hole (10; 20) at a second time of measurement different from the first time of measurement.

3. A method according to claim 2 wherein the first and second predetermined depths respectively held by said first and second antenna (101; 102) at said first time of measurement are substantially placed at a same first common depth and the third and fourth predetermined depths respectively held by said first and second antenna (101; 102) at said second time of measurement are substantially placed at a same second common depth, the second common depth differing from the first common depth.

4. A method according to one or more of the previous claims, wherein the step of feeding a predetermined radio signal to said first antenna (101) comprises providing a frequency signal sweeping between a first lower predetermined frequency (f1) and a second higher predetermined frequency (f2) to the first antenna (101); wherein the first lower predetermined frequency (f1) is higher than 50 MHz; the second upper predetermined frequency (f2) is lower than 1000 MHz.

5. A method according to claim 1, wherein the step of deriving the average dielectric constant ($\varepsilon$') of said portion (31) of soil (30) comprises the steps of:

 - dividing the distance (d) between the first antenna (101) and second antenna (102) when in the first borehole (10) and respectively second borehole (20) and or a distance between the first borehole (10) and the second borehole (20) by the delay ($\Delta t$) with which the predetermined radio signal (s1(t)) transmitted by said first antenna (101) or through a transmitter (103) connected to said first antenna (110) reaches said second antenna (102) or a receiver (104) connected to said second antenna (101), for obtaining a first sub-result;
 - dividing a number corresponding to the speed of light in vacuum by said first sub-result, obtaining a second sub-result;
 - calculating the power of 2 to said second sub-result, to obtain said average dielectric constant of said portion (31) of soil (30).

6. A method according to claim 1 or claim 5, comprising a step of reversing and/or switching the connection between the first antenna (101) and the second antenna (102) with the transmitter (103) and the receiver (104), the connection determining a first operative configuration, so that the first antenna (101) previously connected to the transmitter (103) results connected to the receiver (104) and so that the second antenna (102) previously connected to the receiver (104) results connected to the transmitter (103), thereby determining a second operative configuration, the method further comprising a subsequent step of determining or calculating the value representative of the amount of water ($x_{water}$) and/or humidity and/or the average dielectric constant ($\varepsilon$') of the portion (31) of soil (30) in said second operative configuration.

7. An electromagnetic soil analysis device (100) comprising:

 - a transmitter (103) configured to transmit a predetermined radio signal (s1(t)) and configured to be connected - in use - with a first antenna (101) configured to be introduced in a first borehole (10);
 - a receiver (104) configured to receive at least a part of said predetermined radio signal (s1(t)) after a propagation into a portion (31) of soil (30) and configured to be connected - in use - with a second antenna (102) configured to be introduced in a second borehole (20), and
 - a data processing unit (111) configured to calculate an amount of water ($x_{water}$) and/or humidity of the portion (31) of soil (30) by automatically and electronically calculating the speed of propagation of said predetermined radio signal (s1(t)) between said transmitter (103) and said receiver (104) or by calculating the delay with which the predetermined radio signal (s1(t)) transmitted by said transmitter (103) reaches said second antenna (102) or a receiver (104) connected to said second antenna (102) said electromagnetic soil analysis device, wherein the device (100) is configured to:

   - load a first electronic datum concerning the dielectric constant of the water ($\varepsilon'_{water}$), a second electronic datum concerning the dielectric constant of the soil ($\varepsilon'_{soil}$), and a third datum corresponding to a distance (d) between the first antenna (101) and second antenna (102),
   - calculate an average dielectric constant ($\varepsilon$') of the portion of soil (30) by electronically measuring the speed (v) of propagation of the predetermined radio signal (s1(t)) between said first antenna (101) and said second antenna (102) or the delay ($\Delta t$) with which the predetermined radio signal (s1(t)) transmitted by said first antenna (101) or through a transmitter (103) connected to said first antenna (110) reaches said second antenna (102) or a receiver (104) connected to said second antenna (102);

 the device (100) being **characterized in that** the data processing unit (111) is configured to:

   - calculate a value representative of an amount of water ($x_{water}$) according to the following formula:

$$x_{water} = d - \frac{d(\varepsilon' - \varepsilon'_{water})}{\varepsilon'_{soil} - \varepsilon'_{water}}$$

wherein: d corresponds to the distance between the first antenna (101) and second antenna (102) when in said first borehole (10) and respectively second borehole (20) and or a distance between the first borehole (10) and the second borehole (20); $\varepsilon'$ corresponds to the calculated average dielectric constant of the portion (31) of soil (30); $\varepsilon'_{water}$ corresponds to said first electronic datum concerning the dielectric constant of the water; $\varepsilon'_{soil}$ corresponds to said second electronic datum concerning the dielectric constant of the soil, and wherein $x_{water}$ represents a part of the distance d which is a void filled by water.

8. An electromagnetic soil analysis device according to claim 7, wherein data processing unit (111) is configured to electronically calculate the average dielectric constant of said portion (31) of soil (30) by:

- dividing a first electronic datum corresponding to the distance (d) between the first antenna (101) and second antenna (102) when in said first borehole (10) and respectively second borehole (20) and or a distance between the first borehole (10) and the second borehole (20) by the delay ($\Delta t$) with which the predetermined radio signal (s1(t)) transmitted by said first antenna (101) or through a transmitter (103) connected to said first antenna (110) reaches said second antenna (102) or a receiver (104) connected to said second antenna (101), for obtaining a first sub-result;
- dividing a number corresponding to the speed of light in vacuum by said first sub-result, obtaining a second sub-result;
- calculating the power of 2 to said second sub-result, to obtain said dielectric constant of said portion (31) of soil (30).

9. An electromagnetic soil analysis device according to one or more of claims 7 or 8, wherein the receiver (104) comprises a vector analyzer configured to electronically decompose the received signal in a first - in-phase - component (I) and a second - quadrature - component (Q) and to provide on its output said first - in-phase - component (I) and a second - quadrature - component (Q);
said receiver (104) being configured to perform sampling of the received signal in a plurality of predetermined instants of time, to produce sampled versions of said first - in-phase - component (I) and a second - quadrature - component (Q) and wherein the receiver (104) and/or the data processing unit (111) are configured to perform a discrete inverse Fourier transform on at least a part of the signal received by said receiver (104) or received through said second antenna (103), said discrete inverse Fourier transform being configured to produce in output samples in the time domain to electronically calculate the speed of propagation of said predetermined radio signal (s1(t)) between said transmitter (103) and said receiver (104) or to calculate the delay with which the predetermined radio signal (s1(t)) transmitted by said transmitter (103) reaches said second antenna (102) or said receiver (104) connected to said second antenna (102).

10. A radar soil analysis system (200), said system (200) comprising an electromagnetic soil analysis device (100) according to one or more of claims 7-9, and:- a first antenna (101), electrically connected to said transmitter (103); and - a second antenna (102), electrically connected to said receiver (104);
wherein the first and/or second antenna (101, 102) are dipole antennas or wherein the first and/or second antenna (101, 102) are broadband antennas.


**Patentansprüche**

1. Elektromagnetisches Bodenanalyseverfahren, wobei das Verfahren umfasst:

- einen Schritt eines Herstellens eines ersten Bohrlochs (10) in einer anfänglichen oder ersten vorbestimmten Position in dem Boden (30);
- einen Schritt eines Herstellens eines zweiten Bohrlochs (20) in einer zweiten vorbestimmten Position in dem Boden (30), wobei die zweite Position von der ersten Position verschieden ist;
- einen Schritt eines Einführens einer ersten Antenne (101) in das erste Bohrloch (10) und einer zweiten Antenne (102) in das zweite Bohrloch (20);
- einen Schritt eines Zuführens eines vorbestimmten Funksignals (s1(t)) zu der ersten Antenne (101), so dass die erste Antenne (101) das vorbestimmte Funksignal gemäß einem vordefinierten Strahlungsmuster über einen Abschnitt (31) des Bodens (30) abstrahlt, so dass das vorbestimmte Funksignal (s1(t)) von der zweiten Antenne (102) empfangen wird;
- einen Schritt einer Bodenkompaktheitsanalyse durch ein Berechnen eines Werts, welcher für eine Menge von Wasser ($x_{water}$) und/oder Feuchtigkeit eines Abschnitts (31) eines Bodens (30) repräsentativ ist, der von der Strahlung der ersten Antenne gekreuzt wird, wobei der Abschnitt (31) eines Bodens (30) zwischen der ersten Antenne (101) und der zweiten Antenne (102) positioniert ist,

wobei der Schritt des Berechnens des Werts, welcher für die Menge von Wasser ($x_{water}$) und/oder Feuchtigkeit des Abschnitts (31) eines Bodens (30) repräsentativ ist, durchgeführt wird durch ein elektronisches Messen der Geschwindigkeit einer Ausbreitung des vorbestimmten Funksignals (s1(t)) zwischen der ersten Antenne (101) und der zweiten Antenne (102) oder der Verzögerung, mit welcher das vorbestimmte Funksignal (s1(t)), welches von der ersten Antenne (101) oder durch einen mit der ersten Antenne (101) verbundenen Sender (103) gesendet wird, die zweite Antenne (102) oder einen mit der zweiten Antenne (102) verbundenen Empfänger (104) erreicht;

wobei der Schritt des Berechnens des Werts, welcher für die Menge von Wasser ($x_{water}$) und/oder Feuchtigkeit des Abschnitts (31) eines Bodens (30) repräsentativ ist, die folgenden Schritte umfasst:

- Ableiten einer mittleren dielektrischen Konstante ε' des Abschnitts eines Bodens (30) durch ein elektronisches Messen der Geschwindigkeit (v) einer Ausbreitung des vorbestimmten Funksignals (s1(t)) zwischen der ersten Antenne (101) und der zweiten Antenne (102) oder der Verzögerung (Δt), mit welcher das vorbestimmte Funksignal (s1(t)), welches von der ersten Antenne (101) oder durch einen mit der ersten Antenne (110) verbundenen Sender (103) gesendet wird, die zweite Antenne (102) oder einen mit der zweiten Antenne (102) verbundenen Empfänger (104) erreicht;
- Bereitstellen: eines ersten elektronischen Bezugswerts bezüglich der dielektrischen Konstante des Wassers ($\varepsilon'_{water}$), eines zweiten elektronischen Bezugswerts bezüglich der dielektrischen Konstante des Bodens ($\varepsilon'_{soil}$) und eines dritten Bezugswerts, welcher einem Abstand (d) zwischen der ersten Antenne (101) und der zweiten Antenne (102), wenn diese sich in dem ersten Bohrloch (10) bzw. dem zweiten Bohrloch (20) befinden, und/oder einem Abstand zwischen dem ersten Bohrloch (10) und dem zweiten Bohrloch (20) entspricht;

wobei das Verfahren **dadurch gekennzeichnet ist, dass**:

der Schritt des Berechnens des Werts, welcher für die Menge von Wasser ($x_{water}$) und/oder Feuchtigkeit in dem Abschnitt eines Bodens (30) repräsentativ ist, ferner einen Schritt eines Berechnens des Ergebnisses der folgenden Formel umfasst:

$$x_{water} = d - \frac{d(\varepsilon' - \varepsilon'_{water})}{\varepsilon'_{soil} - \varepsilon'_{water}}$$

wobei $\varepsilon'_{water}$ und $\varepsilon'_{soil}$ dem ersten, dem zweiten bzw. dem dritten bereitgestellten elektronischen Bezugswert entsprechen, ε' der abgeleiteten mittleren dielektrischen Konstante des Abschnitts eines Bodens (30) entspricht und wobei $x_{water}$ einen Teil des Abstands d repräsentiert, welcher ein mit Wasser gefüllter Hohlraum ist.

2. Verfahren nach Anspruch 1, umfassend die Schritte eines Bewegens der ersten Antenne (101) und der zweiten Antenne (102) mit einer synchronen Bewegung in ihr jeweiliges erstes und zweites Bohrloch (10; 20) in einer derartigen Weise, dass während ihrer synchronen Bewegung die ideale Linie, welche die erste Antenne (101) und die zweite Antenne (102) verbindet, wenn diese sich zu einer ersten Messzeit in einer ersten bzw. zweiten vorbestimmten Tiefe in ihrem ersten bzw. zweiten Loch (10; 20) befinden, parallel zu der idealen Linie ist, welche die erste Antenne (101) und die zweite Antenne (102) verbindet, wenn diese sich zu einer zweiten Messzeit, die von der ersten Messzeit verschieden ist, in einer dritten bzw. vierten vorbestimmten Tiefe in ihrem ersten bzw. zweiten Loch (10; 20) befinden.

3. Verfahren nach Anspruch 2, wobei die erste und die zweite vorbestimmte Tiefe, welche zu der ersten Messzeit von der ersten bzw. der zweiten Antenne (101; 102) gehalten sind, im Wesentlichen in einer gleichen ersten gemeinsamen Tiefe platziert sind und die dritte und die vierte vorbestimmte Tiefe, welche zu der zweiten Messzeit von der ersten bzw. der zweiten Antenne (101; 102) gehalten sind, im Wesentlichen in einer gleichen zweiten gemeinsamen Tiefe platziert sind, wobei die zweite gemeinsame Tiefe von der ersten gemeinsamen Tiefe verschieden ist.

4. Verfahren nach einem oder mehreren der vorhergehenden Ansprüche, wobei der Schritt des Zuführens eines vorbestimmten Funksignals zu der ersten Antenne (101) ein Bereitstellen eines Frequenzsignal-Sweeping zwischen einer ersten unteren vorbestimmten Frequenz (f1) und einer zweiten höheren vorbestimmten Frequenz (f2) für die erste Antenne (101) umfasst; wobei die erste untere vorbestimmte Frequenz (f1) höher als 50 MHz ist; wobei die zweite obere vorbestimmte Frequenz (f2) niedriger als 1000 MHz ist.

5. Verfahren nach Anspruch 1, wobei der Schritt des Ableitens der mittleren dielektrischen Konstante ($\varepsilon$') des Abschnitts (31) eines Bodens (30) die folgenden Schritte umfasst:

- Teilen des Abstands (d) zwischen der ersten Antenne (101) und der zweiten Antenne (102), wenn diese sich in dem ersten Bohrloch (10) bzw. dem zweiten Bohrloch (20) befinden, und/oder eines Abstands zwischen dem ersten Bohrloch (10) und dem zweiten Bohrloch (20) durch die Verzögerung ($\Delta$t), mit welcher das vorbestimmte Funksignal (s1(t)), welches von der ersten Antenne (101) oder durch einen mit der ersten Antenne (110) verbundenen Sender (103) gesendet wird, die zweite Antenne (102) oder einen mit der zweiten Antenne (101) verbundenen Empfänger (104) erreicht, um ein erstes Sub-Ergebnis zu erhalten;
- Teilen einer Zahl, welche der Geschwindigkeit von Licht in Vakuum entspricht, durch das erste Sub-Ergebnis, wodurch ein zweites Sub-Ergebnis erhalten wird;
- Berechnen der Zweierpotenz des zweiten Sub-Ergebnisses, um die mittlere dielektrische Konstante des Abschnitts (31) eines Bodens (30) zu erhalten.

6. Verfahren nach Anspruch 1 oder Anspruch 5, umfassend einen Schritt eines Umkehrens und/oder Umschaltens der Verbindung zwischen der ersten Antenne (101) und der zweiten Antenne (102) mit dem Sender (103) und dem Empfänger (104), wobei die Verbindung eine erste Betriebskonfiguration bestimmt, so dass die zuvor mit dem Sender (103) verbundene erste Antenne (101) im Ergebnis mit dem Empfänger (104) verbunden ist und so dass die zuvor mit dem Empfänger (104) verbundene zweite Antenne (102) im Ergebnis mit dem Sender (103) verbunden ist, wodurch eine zweite Betriebskonfiguration bestimmt wird,
wobei das Verfahren ferner einen nachfolgenden Schritt eines Bestimmens oder Berechnens des Werts umfasst, welcher für die Menge von Wasser ($x_{water}$) und/oder Feuchtigkeit und/oder die mittlere dielektrische Konstante ($\varepsilon$') des Abschnitts (31) eines Bodens (30) in der zweiten Betriebskonfiguration repräsentativ ist.

7. Elektromagnetische Bodenanalysevorrichtung (100), umfassend:

- einen Sender (103), welcher dazu eingerichtet ist, ein vorbestimmtes Funksignal (s1(t)) zu senden, und welcher dazu eingerichtet ist, in Verwendung mit einer ersten Antenne (101) verbunden zu sein, welche dazu eingerichtet ist, in ein erstes Bohrloch (10) eingeführt zu sein;
- einen Empfänger (104), welcher dazu eingerichtet ist, wenigstens einen Teil des vorbestimmten Funksignals (s1(t)) nach einer Ausbreitung in einen Abschnitt (31) eines Bodens (30) zu empfangen, und welcher dazu eingerichtet ist, in Verwendung mit einer zweiten Antenne (102) verbunden zu sein, welche dazu eingerichtet ist, in ein zweites Bohrloch (20) eingeführt zu sein, und
- eine Datenverarbeitungseinheit (111), welche dazu eingerichtet ist, eine Menge von Wasser ($x_{water}$) und/oder Feuchtigkeit des Abschnitts (31) eines Bodens (30) zu berechnen, durch ein automatisches und elektronisches Berechnen der Geschwindigkeit einer Ausbreitung des vorbestimmten Funksignals (s1(t)) zwischen dem Sender (103) und dem Empfänger (104) oder durch ein Berechnen der Verzögerung, mit welcher das von dem Sender (103) gesendete vorbestimmte Funksignal (s1(t)) die zweite Antenne (102) oder einen mit der zweiten Antenne (102) verbundenen Empfänger (104) erreicht wobei die elektromagnetische Bodenanalysevorrichtung (100) eingerichtet ist zum:
- Laden eines ersten elektronischen Bezugswerts bezüglich der dielektrischen Konstante des Wassers ($\varepsilon$'$_{water}$), eines zweiten elektronischen Bezugswerts bezüglich der dielektrischen Konstante des Bodens ($\varepsilon$'$_{soil}$) und eines dritten Bezugswerts, welcher einem Abstand (d) zwischen der ersten Antenne (101) und der zweiten Antenne (102) entspricht,
- Berechnen einer mittleren dielektrischen Konstante ($\varepsilon$') des Abschnitts eines Bodens (30) durch ein elektronisches Messen der Geschwindigkeit (v) einer Ausbreitung des vorbestimmten Funksignals (s1(t)) zwischen der ersten Antenne (101) und der zweiten Antenne (102) oder der Verzögerung ($\Delta$t), mit welcher das vorbestimmte Funksignal (s1(t)), welches von der ersten Antenne (101) oder durch einen mit der ersten Antenne (110) verbundenen Sender (103) gesendet wird, die zweite Antenne (102) oder einen mit der zweiten Antenne (102) verbundenen Empfänger (104) erreicht;
wobei die Vorrichtung (100) **dadurch gekennzeichnet ist, dass** die Datenverarbeitungseinheit (111) eingerichtet ist zum:

- Berechnen eines Werts, welcher für eine Menge von Wasser (xwater) repräsentativ ist, gemäß der folgenden Formel:

$$x_{water} = d - \frac{d(\varepsilon' - \varepsilon'_{water})}{\varepsilon'_{soil} - \varepsilon'_{water}}$$

wobei: d dem Abstand zwischen der ersten Antenne (101) und der zweiten Antenne (102), wenn diese sich in dem ersten Bohrloch (10) bzw. dem zweiten Bohrloch (20) befinden, und/oder einem Abstand zwischen dem ersten Bohrloch (10) und dem zweiten Bohrloch (20) entspricht; $\varepsilon'$ der berechneten mittleren dielektrischen Konstante des Abschnitts (31) eines Bodens (30) entspricht; $\varepsilon'_{water}$ dem ersten elektronischen Bezugswert bezüglich der dielektrischen Konstante des Wassers entspricht; $\varepsilon'_{soil}$ dem zweiten elektronischen Bezugswert bezüglich der dielektrischen Konstante des Bodens entspricht und wobei $x_{water}$ einen Teil des Abstands d repräsentiert, welcher ein mit Wasser gefüllter Hohlraum ist.

8. Elektromagnetische Bodenanalysevorrichtung nach Anspruch 7, wobei die Datenverarbeitungseinheit (111) dazu eingerichtet ist, die mittlere dielektrische Konstante des Abschnitts (31) eines Bodens (30) elektronisch zu berechnen, durch:

- Teilen eines ersten elektronischen Bezugswerts, welcher dem Abstand (d) zwischen der ersten Antenne (101) und der zweiten Antenne (102) entspricht, wenn diese sich in dem ersten Bohrloch (10) bzw. dem zweiten Bohrloch (20) befinden, und/oder eines Abstands zwischen dem ersten Bohrloch (10) und dem zweiten Bohrloch (20) durch die Verzögerung (Δt), mit welcher das vorbestimmte Funksignal (s1(t)), welches von der ersten Antenne (101) oder durch einen mit der ersten Antenne (110) verbundenen Sender (103) gesendet wird, die zweite Antenne (102) oder einen mit der zweiten Antenne (101) verbundenen Empfänger (104) erreicht, um ein erstes Sub-Ergebnis zu erhalten;
- Teilen einer Zahl, welche der Geschwindigkeit von Licht in Vakuum entspricht, durch das erste Sub-Ergebnis, wodurch ein zweites Sub-Ergebnis erhalten wird;
- Berechnen der Zweierpotenz des zweiten Sub-Ergebnisses, um die dielektrische Konstante des Abschnitts (31) eines Bodens (30) zu erhalten.

9. Elektromagnetische Bodenanalysevorrichtung nach einem oder mehreren der Ansprüche 7 oder 8, wobei der Empfänger (104) einen Vektoranalysator umfasst, welcher dazu eingerichtet ist, das empfangene Signal elektronisch in eine erste - In-Phase - Komponente (I) und eine zweite - Quadratur - Komponente (Q) zu zerlegen und an seinem Ausgang die erste - In-Phase - Komponente (I) und eine zweite - Quadratur - Komponente (Q) bereitzustellen; wobei der Empfänger (104) dazu eingerichtet ist, in einer Mehrzahl vorbestimmter Zeitpunkte eine Abtastung des empfangenen Signals durchzuführen, um abgetastete Versionen der ersten - In-Phase - Komponente (I) und einer zweiten - Quadratur - Komponente (Q) zu erzeugen, und wobei der Empfänger (104) und/oder die Datenverarbeitungseinheit (111) dazu eingerichtet sind, an wenigstens einem Teil des Signals, welches von dem Empfänger (104) empfangen wird oder durch die zweite Antenne (103) empfangen wird, eine diskrete inverse Fourier-Transformation durchzuführen, wobei die diskrete inverse Fourier-Transformation dazu eingerichtet ist, in einer Ausgabe Abtastungen in dem Zeitbereich zu erzeugen, um die Geschwindigkeit einer Ausbreitung des vorbestimmten Funksignals (s1(t)) zwischen dem Sender (103) und dem Empfänger (104) elektronisch zu berechnen oder um die Verzögerung zu berechnen, mit welcher das von dem Sender (103) gesendete vorbestimmte Funksignal (s1(t)) die zweite Antenne (102) oder den mit der zweiten Antenne (102) verbundenen Empfänger (104) erreicht.

10. Radarbodenanalysesystem (200), wobei das System (200) eine elektromagnetische Bodenanalysevorrichtung (100) nach einem oder mehreren der Ansprüche 7-9 umfasst, und:

- eine erste Antenne (101), welche elektrisch mit dem Sender (103) verbunden ist; und
- eine zweite Antenne (102), welche elektrisch mit dem Empfänger (104) verbunden ist;

wobei die erste und/oder die zweite Antenne (101, 102) Dipolantennen sind oder wobei die erste und/oder die zweite Antenne (101, 102) Breitbandantennen sind.

## Revendications

1. Procédé électromagnétique d'analyse de sol, le procédé comprenant :

- une étape de fabrication d'un premier trou de sonde (10) dans une première position prédéterminée ou initiale dans le sol (30) ;

- une étape de fabrication d'un second trou de sonde (20) dans une seconde position prédéterminée dans le sol (30), ladite seconde position étant différente de la première position ;

- une étape d'introduction d'une première antenne (101) dans le premier trou de sonde (10) et d'une seconde antenne (102) dans le second trou de sonde (20) ;

- une étape d'alimentation d'un signal radio prédéterminé (s1(t)) à ladite première antenne (101), de sorte que la première antenne (101) irradie ledit signal radio prédéterminé en fonction d'un profil d'irradiation prédéfini à travers une portion (31) dudit sol (30) de sorte que ledit signal radio prédéterminé (s1(t)) est reçu par ladite seconde antenne (102) ;

- une étape d'analyse de compacité du sol, en calculant une valeur représentative d'une quantité d'eau ($x_{water}$) et/ou d'une humidité d'une portion (31) de sol (30) concernée par l'irradiation de la première antenne, ladite portion (31) de sol (30) étant positionnée entre la première antenne (101) et la seconde antenne (102),

- l'étape de calcul de la valeur représentative de la quantité d'eau ($x_{water}$) et/ou de l'humidité de la portion (31) de sol (30) étant effectuée en mesurant électroniquement la vitesse de propagation dudit signal radio prédéterminé (s1(t)) entre ladite première antenne (101) et ladite seconde antenne (102) ou le délai avec lequel le signal radio prédéterminé (s1(t)) transmis par ladite première antenne (101) ou à travers un transmetteur (103) connecté à ladite première antenne (101) atteint ladite seconde antenne (102) ou un récepteur (104) connecté à ladite seconde antenne (102) ; l'étape de calcul de la valeur représentative de la quantité d'eau ($x_{water}$) et/ou d'humidité de ladite portion (31) de sol (30) comprenant les étapes de :

- dérivation d'une constante diélectrique moyenne $\varepsilon'$ de la portion de sol (30) en mesurant électroniquement la vitesse (v) de propagation du signal radio prédéterminé (s1(t)) entre ladite première antenne (101) et ladite seconde antenne (102) ou le délai ($\Delta t$) avec lequel le signal radio prédéterminé (s1(t)) transmis par ladite première antenne (101) ou à travers un transmetteur (103) connecté à ladite première antenne (110) atteint ladite seconde antenne (102) ou un récepteur (104) connecté à ladite seconde antenne (102) ;

- fourniture : d'une première donnée électronique concernant la constante diélectrique de l'eau ($\varepsilon'_{water}$), d'une seconde donnée électronique concernant la constante diélectrique du sol ($\varepsilon'_{soil}$), et d'une troisième donnée correspondant à une distance (d) entre la première antenne (101) et la seconde antenne (102) lorsque dans ledit premier trou de sonde (10) et respectivement second trou de sonde (20) et/ou une distance entre le premier trou de sonde (10) et le second trou de sonde (20) ;

le procédé étant **caractérisé en ce que** :

ladite étape de calcul de la valeur représentative de la quantité d'eau ($x_{water}$) et/ou humidité dans ladite portion de sol (30) comprend en outre une étape de calcul du résultat de la formule suivante :

$$x_{water} = d - \frac{d(\varepsilon' - \varepsilon'_{water})}{\varepsilon'_{soil} - \varepsilon'_{water}}$$

$\varepsilon'_{water}$ et $\varepsilon'_{soil}$ correspondent respectivement à ladite première, seconde et troisième données électroniques fournies, $\varepsilon'$ correspond à ladite constante diélectrique moyenne dérivée de la portion de sol (30) et $x_{water}$ représente une partie de la distance d qui est un vide rempli d'eau.

2. Procédé selon la revendication 1, comprenant les étapes de déplacement de la première antenne (101) et de la seconde antenne (102) avec un mouvement synchrone dans leurs premier et second trou de sonde (10 ; 20) respectifs d'une manière telle que durant leur mouvement synchrone la ligne idéale connectant la première antenne (101) et la seconde antenne (102), lorsqu'elles se trouvent dans une première et une seconde profondeur prédéterminée respectives dans leur premier ou second trou (10 ; 20) respectifs à un premier moment de mesure, est parallèle à la ligne idéale connectant la première antenne (101) et la seconde antenne (102) lorsqu'elles se trouvent dans des respectives troisième, quatrième profondeur prédéterminée dans leurs premier, second trou (10 ; 20) respectifs à un second moment de mesure différent du premier moment de mesure.

3. Procédé selon la revendication 2, la première et la seconde profondeur prédéterminée détenues respectivement par lesdites première et seconde antenne (101 ; 102) au niveau dudit premier moment de mesure étant sensiblement placées à une même première profondeur commune et la troisième et la quatrième profondeur prédéterminée détenues respectivement par lesdites première et seconde antenne (101 ; 102) audit second moment de mesure sont sensiblement placées à une même seconde profondeur commune, la seconde profondeur commune différant de la première profondeur commune.

**4.** Procédé selon l'une ou plusieurs des revendications précédentes, l'étape d'alimentation d'un signal radio prédéterminé à ladite première antenne (101) comprenant la fourniture d'un balayage de signal de fréquence entre une première fréquence prédéterminée inférieure (f1) et une seconde fréquence prédéterminée supérieure (f2) vers la première antenne (101); la première fréquence prédéterminée inférieure (f1) étant supérieure à 50 MHz ; la seconde fréquence prédéterminée supérieure (f2) étant inférieure à 1 000 MHz.

**5.** Procédé selon la revendication 1, l'étape de dérivation de la constante diélectrique moyenne ($\varepsilon'$) de ladite portion (31) de sol (30) comprenant les étapes de :

- division de la distance (d) entre la première antenne (101) et la seconde antenne (102) lorsque dans le premier trou de sonde (10) et respectivement le second trou de sonde (20) et/ou d'une distance entre le premier trou de sonde (10) et le second trou de sonde (20) par le délai ($\Delta t$) avec lequel le signal radio prédéterminé (s1(t)) transmis par ladite première antenne (101) ou à travers un transmetteur (103) connecté à ladite première antenne (110) atteint ladite seconde antenne (102) ou un récepteur (104) connecté à ladite seconde antenne (101), pour obtenir un premier sous-résultat ;
- division d'un nombre correspondant à la vitesse de la lumière dans le vide par ledit premier sous-résultat, obtenant un second sous-résultat ;
- calcul de la puissance 2 dudit second sous-résultat, pour obtenir ladite constante diélectrique moyenne de ladite portion (31) de sol (30).

**6.** Procédé selon la revendication 1 ou la revendication 5, comprenant une étape d'inversion et/ou de basculement de la connexion entre la première antenne (101) et la seconde antenne (102) avec le transmetteur (103) et le récepteur (104), la connexion déterminant une première configuration fonctionnelle, de sorte que la première antenne (101) connectée précédemment au transmetteur (103) résulte connectée au récepteur (104) et ainsi que la seconde antenne (102) connectée précédemment au récepteur (104) résulte connectée au transmetteur (103), déterminant ainsi une seconde configuration fonctionnelle,

le procédé comprenant en outre une étape ultérieure de détermination ou de calcul de la valeur représentative de la quantité d'eau ($x_{water}$) et/ou d'humidité et/ou de la constante diélectrique moyenne ($\varepsilon'$) de la portion (31) de sol (30) dans ladite seconde configuration fonctionnelle.

**7.** Dispositif électromagnétique d'analyse de sol (100) comprenant :

- un transmetteur (103) conçu pour transmettre un signal radio prédéterminé (s1(t)) et conçu pour être connecté - durant l'utilisation - à une première antenne (101) conçue pour être introduite dans un premier trou de sonde (10) ;
- un récepteur (104) conçu pour recevoir au moins une partie dudit signal radio prédéterminé (s1(t)) après une propagation dans une portion (31) de sol (30) et conçu pour être connecté - durant l'utilisation - à une seconde antenne (102) conçue pour être introduite dans un second trou de sonde (20), et
- une unité de traitement de données (111) conçue pour calculer une quantité d'eau ($x_{water}$) et/ou d'humidité de la portion (31) de sol (30) en calculant automatiquement et électroniquement la vitesse de propagation dudit signal radio prédéterminé (s1(t)) entre ledit transmetteur (103) et ledit récepteur (104) ou en calculant le délai avec lequel le signal radio prédéterminé (s1(t)) transmis par ledit transmetteur (103) atteint ladite seconde antenne (102) ou un récepteur (104) connecté à ladite seconde antenne (102) ledit dispositif électromagnétique d'analyse de sol, le dispositif (100) étant conçu pour :

- charger une première donnée électronique concernant la constante diélectrique de l'eau ($\varepsilon'_{water}$), une seconde donnée électronique concernant la constante diélectrique du sol ($\varepsilon'_{soil}$), et une troisième donnée correspondant à une distance (d) entre la première antenne (101) et la seconde antenne (102),
- calculer une constante diélectrique moyenne ($\varepsilon'$) de la portion de sol (30) en mesurant électroniquement la vitesse (v) de propagation du signal radio prédéterminé (s1(t)) entre ladite première antenne (101) et ladite seconde antenne (102) ou le délai ($\Delta t$) avec lequel le signal radio prédéterminé (s1(t)) transmis par ladite première antenne (101) ou à travers un transmetteur (103) connecté à ladite première antenne (110) atteint ladite seconde antenne (102) ou un récepteur (104) connecté à ladite seconde antenne (102) ;

le dispositif (100) étant **caractérisé en ce que** l'unité de traitement de données (111) est conçue pour :

- calculer une valeur représentative d'une quantité d'eau ($x_{water}$) en fonction de la formule suivante :

$$x_{water} = d - \frac{d(\varepsilon' - \varepsilon'_{water})}{\varepsilon'_{soil} - \varepsilon'_{water}}$$

dans laquelle : d correspond à la distance entre la première antenne (101) et la seconde antenne (102) lorsque dans ledit premier trou de sonde (10) et respectivement second trou de sonde (20) et/ou une distance entre le premier trou de sonde (10) et le second trou de sonde (20) ; $\varepsilon'$ correspond à la constante diélectrique moyenne calculée de la portion (31) de sol (30) ; $\varepsilon'_{water}$ correspond à ladite première donnée électronique concernant la constante diélectrique de l'eau ; $\varepsilon'_{soil}$ correspond à ladite seconde donnée électronique concernant la constante diélectrique du sol, et dans laquelle $x_{water}$ représente une partie de la distance d qui est un vide rempli d'eau.

8. Dispositif électromagnétique d'analyse de sol selon la revendication 7, l'unité de traitement de données (111) étant conçue pour calculer électroniquement la constante diélectrique moyenne de ladite portion (31) de sol (30) :

- en divisant une première donnée électronique correspondant à la distance (d) entre la première antenne (101) et la seconde antenne (102) lorsque dans ledit premier trou de sonde (10) et respectivement second trou de sonde (20) et/ou une distance entre le premier trou de sonde (10) et le second trou de sonde (20) par le délai ($\Delta t$) avec lequel le signal radio prédéterminé (s1(t)) transmis par ladite première antenne (101) ou à travers un transmetteur (103) connecté à ladite première antenne (110) atteint ladite seconde antenne (102) ou un récepteur (104) connecté à ladite seconde antenne (101), pour obtenir un premier sous-résultat ;
- en divisant un nombre correspondant à la vitesse de la lumière dans vide par ledit premier sous-résultat, obtenant un second sous-résultat ;
- en calculant la puissance 2 dudit second sous-résultat, pour obtenir ladite constante diélectrique de ladite portion (31) de sol (30).

9. Dispositif électromagnétique d'analyse de sol selon l'une ou plusieurs des revendications 7 ou 8, le récepteur (104) comprenant un dispositif d'analyse de vecteur conçu pour décomposer électroniquement le signal reçu dans un premier - composant (I) - en phase et un second - composant (Q) - en quadrature et pour fournir sur sa sortie ledit premier - composant (I) - en phase et un second - composant (Q) - en quadrature ; ledit récepteur (104) étant conçu pour effectuer un échantillonnage du signal reçu dans une pluralité d'instants de temps prédéterminés, pour produire des versions échantillonnées dudit premier - composant (I) - en phase et un second - composant (Q) - en quadrature et le récepteur (104) et/ou l'unité de traitement de données (111) étant conçus pour effectuer une transformée de Fourier inverse discrète sur au moins une partie du signal reçu par ledit récepteur (104) ou reçu à travers ladite seconde antenne (103), ladite transformée de Fourier inverse discrète étant conçue pour produire en sortie des échantillons dans le domaine de temps afin de calculer électroniquement la vitesse de propagation dudit signal radio prédéterminé (s1(t)) entre ledit transmetteur (103) et ledit récepteur (104) ou afin de calculer le délai avec lequel le signal radio prédéterminé (s1(t)) transmis par ledit transmetteur (103) atteint ladite seconde antenne (102) ou ledit récepteur (104) connecté à ladite seconde antenne (102).

10. Système radar d'analyse de sol (200), ledit système (200) comprenant un dispositif électromagnétique d'analyse de sol (100) selon l'une ou plusieurs des revendications 7 à 9, et :

- une première antenne (101), électriquement connectée audit transmetteur (103) ; et
- une seconde antenne (102), électriquement connectée audit récepteur (104) ;

la première et/ou la seconde antenne (101, 102) étant des antennes dipôles ou la première et/ou la seconde antenne (101, 102) étant des antennes large bande.

Fig.1

Fig.2

Fig.3

Fig.4

Fig.5

Fig.6

Fig.7

Fig.8

1000

1001    1003    1004

1002

Fig.9

2000

Performing a first borehole in a predetermined
position in the soil

2001

Performing a second borehole in a predetermined
position in the soil, at a predetermined distance
from the first

2002

Introducing a first, a second antenna respectively in
the first and second borehole, at least at a
predetermined depth

2003

Feeding a radio signal to the first antenna to be
received by the second antenna

2004

Estimating propagation delay or signal speed and
extracting average dielectric constant of the soil

Fig.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20160187524 A1
- US 5408182 A
- JP H0933661 A
- JP H08240550 A

### Non-patent literature cited in the description

- Estimation of dielectric permittivity, water content, and porosity for environmental engineering and hydrogeological studies using ground penetrating radar, a short review. **REHMAN FAISAL et al.** Arabian Journal of Geosciences. Springer Berlin Heidelberg, 05 April 2016, vol. 9, 1-7
- **ANDREW BINLEY ; PETER WINSHIP ; ROY MIDDLETON.** High-resolution characterization of vadose zone dynamics using cross-borehole radar. Dept. Environmental Science, Lancaster University
- **MAGDELINE POKAR ; JARED WEST.** Water Resources Research. School of Earth Sciences, University of Leeds, November 2001, vol. 37, 2639-2652
- Calibration of Time Domain Reflectometry for Water Content Measurement Using a Composite Dielectric Approach. **KURT ROTH ; RAINER SCHULIN ; HANNES FLUEHLER ; WERNER ATTINGER.** Water Resources Research. Institute of Terrestrial Ecology, Soil Physics, Swiss Federal Institute of Technology, October 1990, vol. 26, 2267-2273